(19) Europäisches Patentamt
European Patent Office
Office européen des brevets

(11) **EP 2 772 632 B1**

(12) **EUROPEAN PATENT SPECIFICATION**

(45) Date of publication and mention
of the grant of the patent:
**08.08.2018 Bulletin 2018/32**

(51) Int Cl.:
*F02D 41/02* *(2006.01)*       *F02D 21/08* *(2006.01)*
*F02D 23/00* *(2006.01)*       *F02D 41/14* *(2006.01)*
*F02D 41/40* *(2006.01)*       *F02D 41/00* *(2006.01)*

(21) Application number: **11826154.4**

(22) Date of filing: **24.10.2011**

(86) International application number:
**PCT/JP2011/074438**

(87) International publication number:
**WO 2013/061393 (02.05.2013 Gazette 2013/18)**

(54) **CONTROL DEVICE FOR INTERNAL COMBUSTION ENGINE**

STEUERUNGSVORRICHTUNG FÜR EINEN VERBRENNUNGSMOTOR

DISPOSITIF DE COMMANDE POUR MOTEUR À COMBUSTION INTERNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**03.09.2014 Bulletin 2014/36**

(73) Proprietor: **Toyota Jidosha Kabushiki Kaisha
Toyota-shi, Aichi 471-8571 (JP)**

(72) Inventor: **TSUZUKI Naoyuki
Toyota-shi
Aichi 471-8571 (JP)**

(74) Representative: **TBK
Bavariaring 4-6
80336 München (DE)**

(56) References cited:
**EP-A1- 1 890 023       EP-A2- 2 065 587
JP-A- 2002 276 444     JP-A- 2005 155 603
JP-A- 2005 351 199     JP-A- 2007 154 809
JP-A- 2009 197 670     JP-A- 2009 197 670
JP-A- 2010 138 829     US-A1- 2003 140 629**

**Description**

[Technical Field]

The present invention relates to a control apparatus for a compression self-igniting internal combustion engine typified by a diesel engine, and particularly relates to a procedure for optimizing the oxygen density inside a cylinder.

[Background Art]

As disclosed in JP 2010-127175 A and JP 2010-236460 A, it is known that combustion in a diesel engine mounted in an automobile or the like is achieved mainly by premixed combustion and diffusion combustion. More specifically, when fuel injection from an injector into a combustion chamber is started, first, a combustible air-fuel mixture is generated by evaporation and diffusion of fuel (ignition delay period). Next, this combustible air-fuel mixture undergoes self-ignition at about the same time at several locations in the combustion chamber, and combustion rapidly progresses (premixed combustion). Then, the fuel injection is continued or the fuel injection is resumed after a predetermined interval (fuel injection suspending period) into the combustion chamber in which the temperature is sufficiently increased by this premixed combustion, thereby performing diffusion combustion. Subsequently, since unburned fuel is still present after the fuel injection is terminated, heat generation continues for some period of time (afterburning period).

Recently, as regulations on exhaust emissions from automobiles are becoming stricter (Euro 6, etc.), there is an increasing demand for improving exhaust emissions and preventing combustion variation and misfires by continuously optimizing combustion of an air-fuel mixture.

Combustion in a diesel engine deteriorates partially because of environmental conditions becoming different from standard normal conditions. For example, according to a change in conditions caused by driving in highlands at high altitudes, low ambient temperatures, fuel cetane numbers lower than standard, or the like, an ignition delay of the air-fuel mixture increases, and combustion may deteriorate.

[Summary of Invention]

[Problem to be Solved by the Invention]

In a conventional diesel engine, a boost pressure of intake air, an exhaust gas recirculation (EGR) rate, and a fuel injection time, which are control parameters that affect the combustion state, are controlled independently of each other. That is to say, when the environmental conditions and the like are changed as described above, these control parameters are controlled independently of each other. If one of these control parameter values changes, optimum values of the other control parameter values (e.g., optimum values for optimizing the oxygen density inside the cylinder) are considered to change as well. However, since the control parameters are controlled independently of each other, it is difficult to obtain optimum control parameter values in the case where a change in environmental conditions or the like has occurred. Accordingly, it has not been possible to obtain optimum control parameter values, for example, for improving exhaust emissions or for preventing misfires.

Furthermore, a control apparatus according to the preamble of claim 1 is known from EP 2 065 587 A2.

The present invention was made in view of these circumstances, and it is an object thereof to provide a control apparatus for an internal combustion engine capable of optimizing a plurality of control parameter values of the internal combustion engine.

[Means for Solving the Problems]

According to the present invention, the above object is solved with a control apparatus having the features of claim 1.

- Solution Principles of the Invention -

In a principle of the solution provided by the present invention for achieving the above-described object, when controlling a plurality of control parameters of an internal combustion engine in order to optimize the control parameters for the oxygen density inside the cylinder, the control parameters are corrected according to a priority order that has been set thereto, and the oxygen density at a predetermined time is optimized, thereby enabling optimization of the combustion state inside the cylinder.

- Solving Means -

Specifically, the present invention is premised on a control apparatus for a compression self-igniting internal combustion engine that performs combustion by self-ignition of fuel injected from a fuel injection valve into a cylinder. This control apparatus for an internal combustion engine includes target value setting means for performing setting in priority order of target values of a boost pressure of intake air, an exhaust gas recirculation rate, and a fuel injection time such that an actual oxygen density inside the cylinder at a predetermined time after the fuel is injected is adjusted using a target oxygen density inside the cylinder set in association with the predetermined time as a target value.

A specific operation procedure with the priority order being set is such that neither the exhaust gas recirculation rate nor the fuel injection time is corrected in a case where the actual oxygen density matches the target oxygen density due to correction of the boost pressure of intake air to the target value, the exhaust gas recirculation rate is corrected to the target value in a case where the actual oxygen density does not match the target oxygen density even with the correction of the boost pressure of intake air to the target value, the fuel injection time is not corrected in a case where the actual oxygen density matches the target oxygen density due to correction of the exhaust gas recirculation rate to the target value, and the fuel injection time is corrected to the target value in a case where the actual oxygen density does not match the target oxygen density even with the correction of the exhaust gas recirculation rate to the target value.

At that time, "the exhaust gas recirculation rate is not corrected" refers to a concept that includes both the case where the correction amount of the exhaust gas recirculation rate to the target value is "0" and the case where the target value of the exhaust gas recirculation rate is not calculated. In a similar manner, "the fuel injection time is not corrected" refers to a concept that includes both the case where the correction amount of the fuel injection time to the target value is "0" and the case where the target value of the fuel injection time is not calculated.

According to this specific matter, first, the boost pressure of intake air that greatly affects the oxygen density inside the cylinder is corrected, and, thus, the discrepancy of the actual oxygen density from the target oxygen density is reliably solved. Furthermore, a priority is given to correction of the boost pressure of intake air over correction of the exhaust gas recirculation rate and correction of the fuel injection time, and, thus, the oxygen density can be optimized without a risk of a deterioration in the exhaust emissions caused by correction of the exhaust gas recirculation rate or a deterioration in the fuel consumption rate caused by correction of the fuel injection time. Furthermore, the exhaust gas recirculation rate is corrected to the target value in the case where the actual oxygen density does not match the target oxygen density even with the correction of the boost pressure of intake air to the target value. The oxygen density inside the cylinder is changed by correcting the exhaust gas recirculation rate, and the oxygen density can be accordingly brought close to the target oxygen density. Furthermore, the fuel injection time is corrected to the target value in the case where the actual oxygen density does not match the target oxygen density even by correcting the exhaust gas recirculation rate to the target value. The volume inside the cylinder at the predetermined time is properly set by correcting the fuel injection time, and the oxygen density can be accordingly brought close to the target oxygen density. The target values are set according to a priority order that has been set to the control parameters, and the actual oxygen density is caused to match the target oxygen density. Accordingly, it is possible to obtain optimum control parameter values for, for example, improving exhaust emissions and preventing misfires.

More specifically, the target value setting means sets the target value of the boost pressure of intake air such that the boost pressure of intake air is increased in a case where the actual oxygen density is lower than the target oxygen density, sets the target value of the exhaust gas recirculation rate such that the exhaust gas recirculation rate is reduced in a case where the actual oxygen density is lower than the target oxygen density, and sets the target value of the fuel injection time such that a volume inside the cylinder at the predetermined time is reduced in a case where the actual oxygen density is lower than the target oxygen density.

That is to say, in a principle for increasing the oxygen density in the case where the actual oxygen density is lower than the target oxygen density, in correction of the boost pressure of intake air, the boost pressure of intake air is increased, so that the oxygen amount inside the cylinder is increased, and, thus, the oxygen density is increased. Furthermore, in correction of the exhaust gas recirculation rate, the exhaust gas recirculation rate is reduced, so that the oxygen density inside the cylinder is increased. Furthermore, in correction of the fuel injection time, the target value of the fuel injection time is set such that the volume inside the cylinder at the predetermined time is reduced, so that the amount of oxygen per unit volume inside the cylinder is increased, and, thus, the oxygen density is increased.

More specifically, the predetermined time after the fuel is injected is an end of a physical ignition delay period of the injected fuel.

Hereinafter, the reason why the target oxygen density is defined using as a reference the end of a physical ignition delay period of the thus injected fuel, and the target control parameter values are set such that the actual oxygen density at that time is brought close to the target oxygen density will be described. The physical ignition delay period of fuel is the time required for evaporation of fuel drops and mixing, which is greatly affected by the oxygen density inside the cylinder and may greatly vary depending on this oxygen density. On the other hand, the chemical ignition delay period is the time required for chemical bonding and breakdown of fuel vapor that has been evaporated and mixed in the physical ignition delay period and for heat generation by oxidation, which is greatly affected by the oxygen density at the end of the physical ignition delay period and varies depending on this oxygen density. That is to say, the combustion state of the injected fuel is greatly affected by the oxygen density at the end of the physical ignition delay period. Accordingly, a good combustion state of the injected fuel can be achieved by defining the target oxygen density using as a reference the end of the physical ignition delay period of this injected fuel, and setting the target control parameter values such that the actual oxygen density at that time is brought close to the target oxygen density.

Preferably, means for obtaining the end of the physical ignition delay period is configured so as to obtain the end based on a fuel injection time, a fuel injection pressure, an intake air amount, an intake air pressure, and an intake air temperature. Furthermore, the end of the physical ignition delay period may be obtained as a time at which an in-spray equivalent ratio of the injected fuel that has exceeded a predetermined in-spray combustible equivalent ratio is lowered to the in-spray combustible equivalent ratio.

When obtaining the end of the physical ignition delay period according to the in-spray equivalent ratio in this manner, the end of the physical ignition delay period can be estimated by directly recognizing the actual spray state (indicator expressing ease of ignition). As a result, the end of the physical ignition delay period can be precisely estimated even in the case where a change in environments, a transition of operation, or the like has occurred.

Furthermore, when correcting the boost pressure of intake air to the target value, the target value setting means may preferably change the exhaust gas recirculation rate according to a delay until the boost pressure of intake air reaches the target value. More specifically, the greater the delay until the boost pressure of intake air reaches the target value, the smaller the exhaust gas recirculation rate the target value setting means sets.

When there is a delay until the boost pressure of intake air reaches the target value, a discrepancy may occur between the actual oxygen density and the target oxygen density during that period. In consideration of this aspect, if there is the delay, the actual oxygen density is brought close to the target oxygen density by changing the exhaust gas recirculation rate. Accordingly, even in the case where there is a delay in the boost pressure of intake air, the actual oxygen density can be promptly brought close to the target oxygen density.

[Effects of the Invention]

In the present invention, in order to optimize the control parameters for the oxygen density inside the cylinder, the control parameters are corrected according to a priority order that has been set thereto. Accordingly, it is possible to obtain optimum control parameter values for, for example, improving exhaust emissions and preventing misfires.

[Brief Description of Drawings]

[FIG. 1] FIG. 1 is a view showing the schematic configuration of an engine and a control system thereof according to an embodiment.

[FIG. 2] FIG. 2 is a cross-sectional view showing a combustion chamber of a diesel engine and parts therearound.

[FIG. 3] FIG. 3 is a block diagram showing the configuration of a control system such as an ECU.

[FIG. 4] FIG. 4 shows graphs illustrating an example of a change in heat generation rate (amount of heat generated per unit rotation angle of a crankshaft) and a change in fuel injection rate (quantity of fuel injected per unit rotation angle of the crankshaft) when ideal combustion is performed during the combustion stroke.

[FIG. 5] FIG. 5 is a flowchart showing the first half of a procedure for controlling the oxygen density according to a first embodiment.

[FIG. 6] FIG. 6 is a flowchart showing the second half of the procedure for controlling the oxygen density according to the first embodiment.

[FIG. 7] FIG. 7 is a graph for illustrating an example of an operation that estimates the end of a physical ignition delay period.

[FIG. 8] FIG. 8 is a graph for illustrating a change in oxygen density with respect to the crank angle when controlling the oxygen density.

[FIG. 9] FIG. 9 is a flowchart showing a procedure for controlling the oxygen density according to a second embodiment.

[FIG. 10] FIG. 10 is a flowchart showing a procedure for calculating a base target value in oxygen density control according to the second embodiment.

[FIG. 11] FIG. 11 is a flowchart showing a procedure for calculating an actual oxygen density in oxygen density control according to the second embodiment.

[FIG. 12] FIG. 12 is a flowchart showing a procedure for calculating a final target boost pressure in oxygen density control according to the second embodiment.

[FIG. 13] FIG. 13 is a flowchart showing a procedure for calculating a target EGR rate in oxygen density control according to the second embodiment.

[FIG. 14] FIG. 14 is a flowchart showing a procedure for calculating a final injection time in oxygen density control according to the second embodiment.

[Mode for Carrying Out the Invention]

Hereinafter, embodiments of the present invention will be described with reference to the drawings. In these embodiments, a case will be described in which the present invention is applied to a common rail in-cylinder direct injection multi-cylinder (e.g., in-line four-cylinder) diesel engine (compression self-igniting internal combustion engine) mounted in an automobile.

- Engine Configuration -

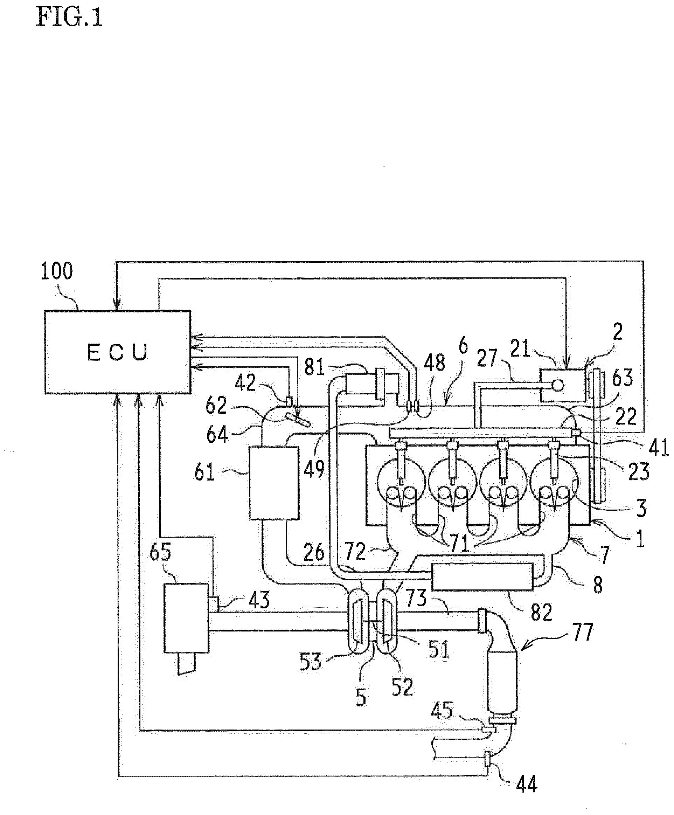

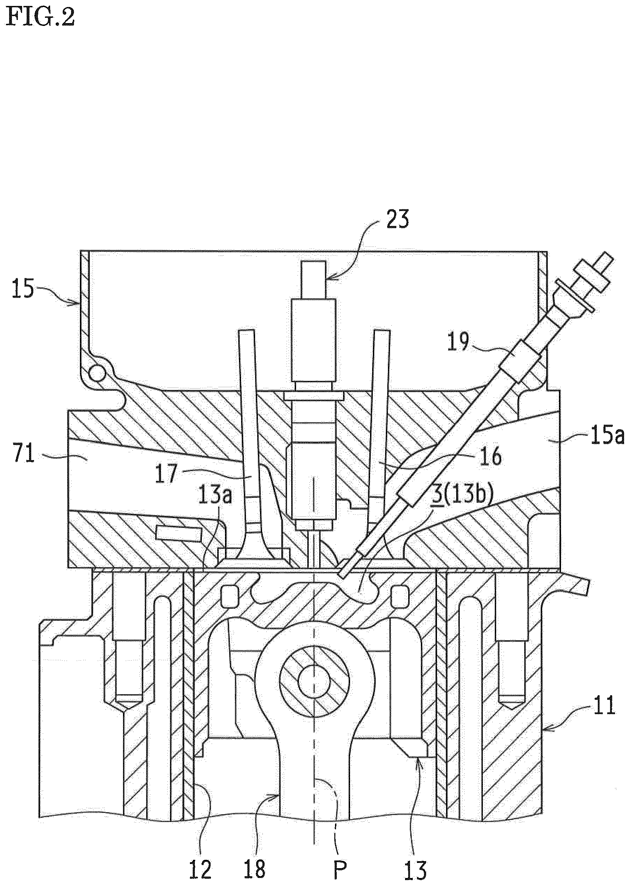

First, the schematic configuration of a diesel engine (hereinafter, may be simply referred to as an "engine") according to this embodiment will be described. FIG. 1 is a schematic configuration diagram of an engine 1 and a control system thereof according to this embodiment. FIG. 2 is a cross-sectional view showing a combustion chamber 3 of the diesel engine and parts therearound.

As shown in FIG. 1, the engine 1 according to this embodiment is configured as a diesel engine system having a fuel supply system 2, the combustion chambers 3, an intake system 6, an exhaust system 7, and the like as its main portions.

The fuel supply system 2 is provided with a supply pump 21, a common rail 22, injectors (fuel injection valves) 23, an engine fuel path 27, and the like.

The supply pump 21 draws fuel from a fuel tank, and after putting the drawn fuel under high pressure, supplies the fuel via the engine fuel path 27 to the common rail 22. The common rail 22 has the function of an accumulation chamber for holding (accumulating) high-pressure fuel at a predetermined pressure, and distributes the accumulated fuel to the injectors 23. The injectors 23 are each configured from a piezo injector that internally includes a piezoelectric element (piezo element) and supplies fuel by injection into the combustion chamber 3 by appropriately opening the valve.

The intake system 6 is provided with an intake manifold 63 connected to an intake port 15a formed in a cylinder head 15 (see FIG. 2), and an intake pipe 64 that constitutes an intake path is connected to the intake manifold 63. Furthermore, in this intake path, an air cleaner 65, an airflow meter 43, and a throttle valve (intake throttling valve) 62 are arranged in order from the upstream side. The airflow meter 43 outputs an electrical signal according to the amount of air that flows into the intake path via the air cleaner 65.

The exhaust system 7 is provided with an exhaust manifold 72 connected to exhaust ports 71 formed in the cylinder head 15, and an exhaust pipe that constitutes an exhaust path is connected to the exhaust manifold 72. Furthermore, in this exhaust path, an exhaust purification apparatus 77 is disposed. The exhaust purification apparatus 77 is provided with a catalyst (NOx storage catalyst or oxidization catalyst) and a diesel particulate filter (DPF). Furthermore, as the exhaust purification apparatus 77, a diesel particulate-NOx reduction catalyst (DPNR catalyst) may be used.

Hereinafter, the configuration of the combustion chamber 3 of the diesel engine and parts therearound will be described with reference to FIG. 2. As shown in FIG. 2, in a cylinder block 11 that constitutes part of the engine, a cylindrical cylinder bore 12 is formed in each cylinder (each of four cylinders), and a piston 13 is housed within each cylinder bore 12 such that the piston 13 can slide in the vertical directions.

The combustion chamber 3 is formed on the upper side of a top face 13a of the piston 13. That is to say, the combustion chamber 3 is defined by a bottom face of the cylinder head 15 attached to top of the cylinder block 11, an inner wall face of the cylinder bore 12, and the top face 13a of the piston 13. A cavity (recess) 13b is concavely provided in substantially the center of the top face 13a of the piston 13, and this cavity 13b also constitutes part of the combustion chamber 3.

The piston 13 is linked via a connecting rod 18 to a crankshaft that is an engine output shaft. Accordingly, reciprocal movement of the piston 13 within the cylinder bore 12 is transmitted via the connecting rod 18 to the crankshaft, and engine power is obtained due to rotation of this crankshaft. Furthermore, a glow plug 19 is disposed facing the combustion chamber 3. The glow plug 19 glows due to the flow of electrical current immediately before the engine 1 is started, and functions as a starting assistance apparatus whereby ignition and combustion are promoted due to part of a fuel spray being blown onto the glow plug.

In the cylinder head 15, the intake port 15a and the exhaust port 71 are formed, an intake valve 16 that opens and closes the intake port 15a and an exhaust valve 17 that opens and closes the exhaust port 71 are arranged. Furthermore, the injector 23 that injects fuel directly into the combustion chamber 3 is attached to the cylinder head 15. The injector 23 is disposed substantially in the center above the combustion chamber 3 in an upright posture along a cylinder center line P, and injects fuel introduced from the common rail 22 toward the combustion chamber 3 at a predetermined timing.

Furthermore, as shown in FIG. 1, the engine 1 is equipped with a supercharger (turbocharger) 5. The turbocharger 5 is provided with a turbine wheel 52 and a compressor wheel 53 that are linked via a turbine shaft 51. The compressor wheel 53 is disposed facing the inside of the intake pipe 64, and the turbine wheel 52 is disposed facing the inside of the exhaust pipe 73. Accordingly, the turbocharger 5 uses exhaust flow (exhaust pressure) received the turbine wheel 52 to rotate the compressor wheel 53, thereby performing a so-called boost operation that increases the intake air pressure. The turbocharger 5 in this embodiment is a variable nozzle-type turbocharger in which a variable nozzle vane mechanism (not shown) is provided on the turbine wheel 52 side, and it is possible to adjust the boost pressure of the engine 1 by adjusting the opening degree of this variable nozzle vane mechanism.

The intake pipe 64 of the intake system 6 is equipped with an intercooler 61 for forcibly cooling intake air heated due to boosting with the turbocharger 5.

Furthermore, the engine 1 is equipped with an exhaust gas recirculation path (EGR path) 8 that connects the intake system 6 and the exhaust system 7. The EGR path 8 lowers the combustion temperature by appropriately directing part of the exhaust gas back to the intake system 6 and resupplying that exhaust gas to the combustion chambers 3, thereby reducing the amount of NOx generated. Furthermore, the EGR path 8 is equipped with an EGR valve 81 that, by being opened and closed steplessly under electronic control, is capable of freely adjusting the flow rate of exhaust gas that flows through the EGR path 8, and an EGR cooler 82 for cooling exhaust gas that passes through (recirculates through) the EGR path 8. The EGR device (exhaust gas recirculating device) is configured from the EGR path 8, the EGR valve 81, the EGR cooler 82, and the like.

- Sensors -

Various sensors are installed at respective locations of the engine 1, and output signals related to environmental conditions at the respective locations or the operation state of the engine 1.

For example, the airflow meter 43 outputs a detection signal according to the flow rate of intake air (the amount of intake air) on the upstream side of the throttle valve 62 within the intake system 6. An intake temperature sensor 49 is disposed in the intake manifold 63, and outputs a detection signal according to the temperature of intake air. An intake pressure sensor 48 is disposed in the intake manifold 63 and outputs a detection signal according to the pressure of intake air. An A/F (air-fuel ratio) sensor 44 outputs a detection signal that continuously changes according to the oxygen concentration in exhaust gas on the downstream side of the exhaust purification apparatus 77 of the exhaust system 7. An exhaust temperature sensor 45 likewise outputs a detection signal according to the temperature of exhaust gas (exhaust temperature) on the downstream side of the exhaust purification apparatus 77 of the exhaust system 7. A rail pressure sensor 41 outputs a detection signal according to the pressure of fuel accumulated in the common rail 22. A throttle position sensor 42 detects the opening degree of the throttle valve 62.

- ECU -

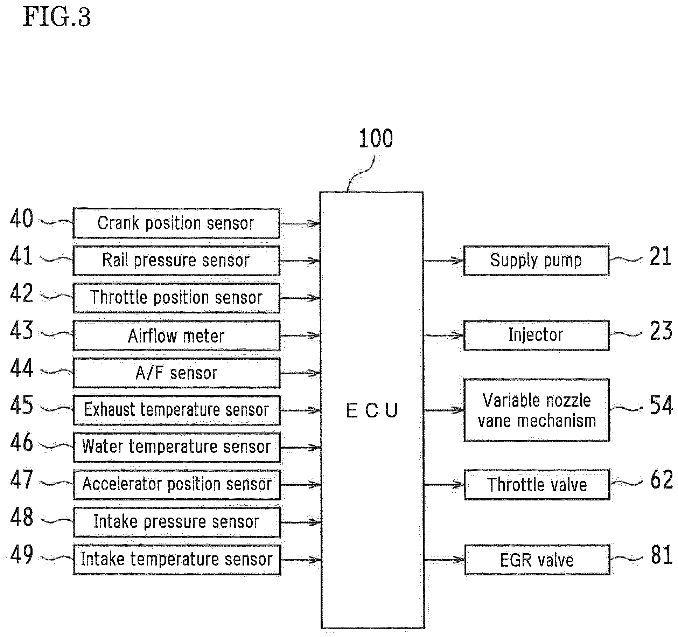

An ECU 100 is provided with a microcomputer configured from a CPU, a ROM, a RAM, and the like, and input and output circuits (not shown). As shown in FIG. 3, the input circuit of the ECU 100 is connected to the rail pressure sensor 41, the throttle position sensor 42, the airflow meter 43, the A/F sensor 44, the exhaust temperature sensor 45, the intake pressure sensor 48, and the intake temperature sensor 49. Furthermore, the input circuit is connected to a water temperature sensor 46 that outputs a detection signal according to the coolant temperature of the engine 1, an accelerator position sensor 47 that outputs a detection signal according to the amount of accelerator pedal depression, a crank position sensor 40 that outputs a detection signal (pulse) each time the output shaft (crankshaft) of the engine 1 rotates by a specific angle, and the like.

On the other hand, the output circuit of the ECU 100 is connected to the supply pump 21, the injectors 23, the throttle valve 62, the EGR valve 81, and a variable nozzle vane mechanism (actuator for adjusting the opening degree of the nozzle vane) 54 of the turbocharger 5.

The ECU 100 performs various controls of the engine 1 based on output values from the various sensors, calculated values obtained according to arithmetic expressions using the output values, or various maps stored in the ROM.

For example, the ECU 100 performs a pilot injection (auxiliary injection) and a main injection as fuel injection control of the injectors 23.

The pilot injection is an operation that injects a small amount of fuel in advance, prior to the main injection from the injector 23. Furthermore, the pilot injection is an injection operation for suppressing a fuel ignition delay in the main injection, thereby leading to a stable diffusion combustion, and is also referred to as an auxiliary injection. Furthermore, the pilot injection in this embodiment has, in addition to a function of suppressing the initial combustion speed by the main injection, a preheating function of increasing the temperature in the cylinder. That is to say, after the pilot injection, fuel injection is suspended, and the temperature of the compressed gas (the temperature in the cylinder) is sufficiently increased before the main injection is started such that the self-ignition temperature of the fuel (e.g., 1000 K) is reached, thereby securing good ignitability of fuel injected in the main injection.

The main injection is an injection operation for generating a torque of the engine 1 (operation that supplies fuel for generating torques). The injection quantity in this main injection is determined, basically, such that a required torque is obtained according to the operation states such as the engine speed, the accelerator operation amount, the coolant temperature, the intake air temperature, and the like. For example, the greater the engine speed (the engine speed calculated based on the detection value from the crank position sensor 40) or the greater the accelerator operation amount (the amount of accelerator pedal depression detected by the accelerator position sensor 47) (i.e., the greater the accelerator opening degree), the greater the resulting torque requirement value of the engine 1 becomes. Accordingly, the quantity of fuel to be injected in the main injection is set to a larger value.

Combustion of fuel injected in the main injection is started after a physical ignition delay period and a chemical ignition delay period. At that time, if preheating inside the cylinder is properly performed by the pilot injection, premixed combustion of fuel injected in the main injection is hardly performed, and diffusion combustion is mainly performed. As a result, control of the injection timing in the main injection becomes substantially equal to control the start timing in the diffusion combustion, and the controllability of combustion can be significantly improved.

Here, the physical ignition delay is the time required for evaporation of fuel drops and mixing, and depends on the gas temperature in the combustion space and the like. On the other hand, the chemical ignition delay is the time required for chemical bonding and breakdown of fuel vapor and for heat generation by oxidation.

In an example of a specific fuel injection mode, the pilot injection (fuel injection from a plurality of injection ports formed in the injector 23) is performed before the piston 13 reaches the compression top dead center, fuel injection is suspended, and after a predetermined interval, the main injection is performed when the piston 13 reaches the vicinity of the compression top dead center. Accordingly, fuel burns due to self ignition, and the energy generated by this combustion then becomes kinetic energy for depressing the piston 13 toward the bottom dead center (energy that functions as engine power), thermal energy for increasing the temperature in the combustion chamber 3, and thermal energy to be dissipated via the cylinder block 11 and the cylinder head 15 to the outside (e.g., the coolant).

In the diesel engine 1, it is important to concurrently satisfy requests to improve exhaust emissions by reducing the amount of NOx generated and the amount of smoke generated, to reduce combustion noise during the combustion stroke, to sufficiently secure an engine torque, and the like. In order to concurrently satisfy these requests, it is effective to properly control the change in heat generation rate inside the cylinder during the combustion stroke (the change represented by the heat generation rate waveform).

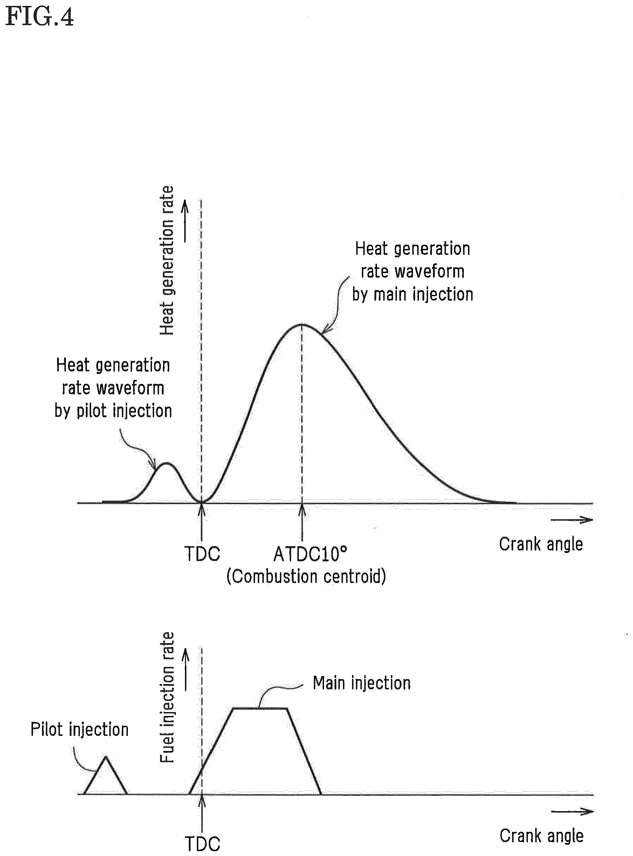

The waveform shown in the upper graph in FIG. 4 indicates an example of the ideal heat generation rate waveform for combustion of fuel injected in the pilot injection and the main injection, where the horizontal axis represents the crank angle and the vertical axis represents the heat generation rate. In the graph, TDC refers to the crank angle position corresponding to the compression top dead center of the piston 13. Furthermore, the waveform shown in the lower graph in FIG. 4 indicates the waveform of the injection rate of fuel injected from the injector 23 (the quantity of fuel injected per unit rotation angle of the crankshaft).

As for the heat generation rate waveform, for example, the combustion of fuel injected in the main injection is started from near the compression top dead center (TDC) of the piston 13 is started, the heat generation rate reaches its local maximum (peak value) at a predetermined piston position after the compression top dead center of the piston 13 (e.g., at the time of 10° after the compression top dead center (10° ATDC)), and the combustion of fuel injected in the main injection is finished at a further predetermined piston position after the compression top dead center (e.g., at the time of 25° after the compression top dead center (25° ATDC)). If the combustion of the air-fuel mixture is performed in a state where the heat generation rate changes in this manner, for example, 50% of the air-fuel mixture inside the cylinder will be completely combusted at the time of 10° after the compression top dead center (10° ATDC). That is to say, the time of 10° after the compression top dead center (10° ATDC) functions as a combustion centroid and about 50% of the total amount of heat generated during the combustion stroke is generated by 10° ATDC, and the engine 1 can operate with high thermal efficiency.

In a state where combustion is performed with such an ideal heat generation rate waveform, preheating inside the cylinder is sufficiently performed by the pilot injection, and, due to this preheating, fuel injected in the main injection is immediately exposed to an environment at a temperature of its own self-ignition temperature or higher after the injection, and combustion is started after the physical ignition delay period and the chemical ignition delay period.

Note that, other than the pilot injection and the main injection described above, an after-injection or a post-injection is performed as necessary. The functions of these injections are well known, and, thus, a description thereof has been omitted.

Furthermore, the ECU 100 controls the opening degree of the EGR valve 81 according to the operation state of the engine 1, and adjusts the amount of exhaust gas recirculated (EGR amount) toward the intake manifold 63. Basically, the EGR amount is adjusted (EGR rate is adjusted) according to an EGR map created in advance through experimentation and simulation and stored in the ROM. This EGR map is a map for determining the EGR amount (EGR rate) using the engine speed and the engine load as parameters. If the EGR rate is corrected in oxygen density control, which will be described later, values that are not obtained from this EGR map are used to adjust the EGR amount (EGR rate).

Furthermore, the fuel injection pressure when injecting fuel is determined based on the internal pressure of the common rail 22. In regard to the internal pressure of the common rail, normally, the greater the engine load and the greater the engine speed, the greater the target pressure of fuel supplied from the common rail 22 to the injectors 23 (i.e., the target fuel pressure) becomes. This target rail pressure is set, for example, according to a fuel pressure setting map stored in the ROM. Note that, in this embodiment, the fuel pressure is adjusted between 30 MPa to 200 MPa according to the engine load or the like.

As a feature of this embodiment, the ECU 100 controls a plurality of control parameters for optimizing the oxygen density inside the cylinder at a predetermined time after fuel injection (main injection) is performed. These control parameters are the boost pressure inside the cylinder (boost pressure of intake air), the EGR rate (exhaust gas recirculation rate), and the fuel injection timing (fuel injection time). Hereinafter, the oxygen density control will be described.

- Oxygen Density Control -

In summary, in the oxygen density control, the boost pressure, the EGR rate, and the fuel injection timing are adjusted such that the oxygen density inside the cylinder at a predetermined time after the main injection is started (hereinafter, referred to as an "actual oxygen density") matches a preset target oxygen density (such that the actual oxygen density is adjusted using the target oxygen density as a target value). Furthermore, a priority order is set to the boost pressure, the EGR rate, and the fuel injection timing that are control parameters. The boost pressure is given a highest priority (a control parameter given a highest priority), the EGR rate is given a second highest priority (a control parameter given a second highest priority next to the boost pressure), and the fuel injection timing is given a third highest priority (a control parameter given a lowest priority). That is to say, target control parameter values are set according to this priority order as necessary (target control parameter values are set by target value setting means), and control parameter values are controlled according to this priority order so as to achieve the target values.

In correction that matches the control parameter values with the target values, specifically, if the actual oxygen density is lower than the target oxygen density, the boost pressure inside the cylinder is corrected such that the boost pressure is increased (e.g., such that the opening degree of the nozzle vane is reduced). That is to say, the boost pressure is increased, thereby increasing the oxygen amount inside the cylinder and increasing the oxygen density. Furthermore, if the actual oxygen density is lower than the target oxygen density, the EGR rate is corrected such that the EGR rate is reduced (e.g., the opening degree of the EGR valve 81 is reduced). That is to say, the EGR rate is reduced, thereby increasing the rate of fresh air introduced into the intake system 6, increasing the oxygen concentration inside the cylinder and increasing the oxygen density. Furthermore, if the actual oxygen density is lower than the target oxygen density, the fuel injection timing is corrected such that the volume inside the cylinder at the predetermined time (predetermined time after the main injection is started, for which the target oxygen density is set) is reduced. That is to say, the predetermined time is set such that the volume inside the cylinder is reduced, thereby increasing the compression degree of intake air and increasing the oxygen density.

Next, the reason why the priority order is set as described above will be described.

The discrepancy of the actual oxygen density from the target oxygen density is reliably solved by giving the highest priority to correction of the boost pressure that particularly greatly affects the oxygen density inside the cylinder. The highest priority is given to correction of the boost pressure also in order to optimize the oxygen density without a risk of a deterioration in the exhaust emissions caused by correction of the EGR rate (e.g., an increase in the amount of NOx generated caused by a reduction in the EGR rate) or a deterioration in the fuel consumption rate caused by correction of the fuel injection timing (an increase in the quantity of fuel consumed caused by retarding the fuel injection timing). Furthermore, in this embodiment, a priority is given to an improvement of the fuel consumption rate, and, thus, a higher priority is given to correction of the EGR rate over correction of the fuel injection timing.

Furthermore, the predetermined time after the main injection is performed (time used as a reference for matching the actual oxygen density with the target oxygen density) is defined as the end of the physical ignition delay period of fuel injected in the main injection.

Hereinafter, the reason why the target oxygen density is defined using as a reference the end of the physical ignition delay period of fuel injected in the main injection and the control parameters are adjusted such that the actual oxygen density at that time is brought close to the target oxygen density will be described.

The physical ignition delay period of fuel is the time required for evaporation of fuel drops and mixing, which is greatly affected by the oxygen density inside the cylinder and may greatly vary depending on this oxygen density. On the other hand, the chemical ignition delay period is the time required for chemical bonding and breakdown of fuel vapor that has been evaporated and mixed in the physical ignition delay period and for heat generation by oxidation, which is greatly affected by the oxygen density at the end of the physical ignition delay period and varies depending on this oxygen density. That is to say, ignitability of fuel injected in the main injection is greatly affected by the oxygen density at the end of the physical ignition delay period. Accordingly, in this embodiment, the target oxygen density is defined using as a reference the end of the physical ignition delay period of fuel injected in the main injection and the control parameters are adjusted such that the actual oxygen density at that time is brought close to the target oxygen density, and, thus, the combustion state can be properly optimized.

Next, a plurality of embodiments regarding specific oxygen density control will be described.

First Embodiment

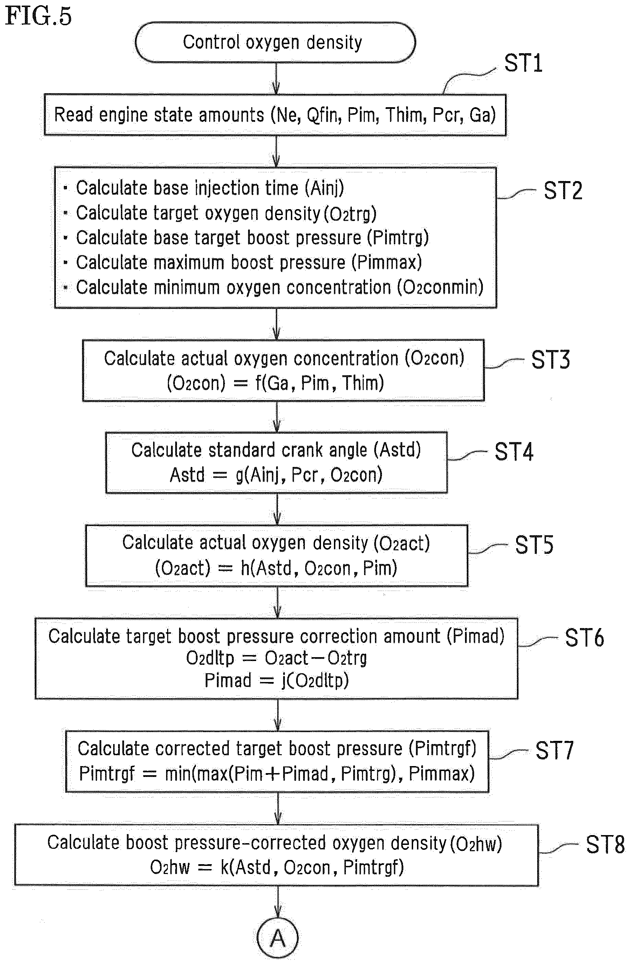

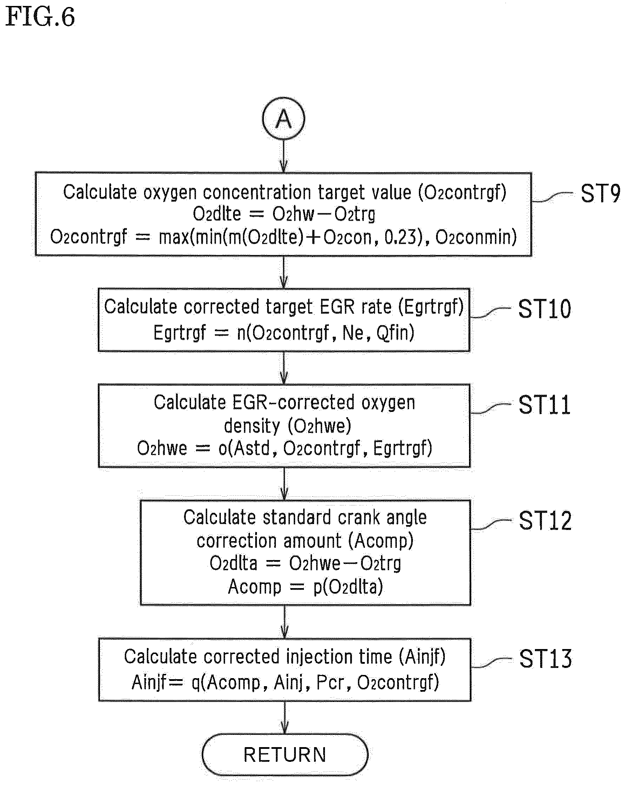

FIGS. 5 and 6 are flowcharts showing a procedure for controlling the oxygen density according to the first embodiment. The procedure in these flowcharts is performed repeatedly every few milliseconds or every time a combustion stroke is performed after the engine 1 is started. Furthermore, in these flowcharts, after respective correction amounts of the boost pressure, the EGR rate, and the fuel injection timing are calculated as necessary, the control parameters are controlled according to the correction amounts. That is to say, it is not that the control parameters are sequentially controlled each time a correction amount of each control parameter is calculated, but that the control parameters are simultaneously controlled according to correction amounts of the respective control parameters after the correction amounts are calculated.

First, in step ST1, state amounts of the engine 1 are read. More specifically, an engine speed Ne, a fuel injection quantity (e.g., the fuel injection quantity in the main injection corresponding to the engine load) Qfin, an intake air boost pressure Pim, an intake air temperature Thim, a fuel injection pressure (corresponding to the common rail internal pressure) Pcr, and a fresh air intake amount Ga are read.

The engine speed Ne is calculated based on a detection value from the crank position sensor 40. The fuel injection quantity Qfin is recognized from an instructed fuel injection quantity that is set based on the amount of accelerator pedal depression detected by the accelerator position sensor 47, the engine speed Ne, and the like. The intake air boost pressure Pim is obtained based on an output signal from the intake pressure sensor 48. The intake air temperature Thim is obtained based on an output signal from the intake temperature sensor 49. The fuel injection pressure Pcr is obtained based on an output signal from the rail pressure sensor 41. The fresh air intake amount Ga is obtained based on an output signal from the airflow meter 43.

Subsequently, the procedure advances to step ST2, where a base injection time Ainj, a target oxygen density $O_2$trg, a base target boost pressure Pimtrg, a maximum boost pressure Pimmax, and a minimum oxygen concentration $O_2$conmin are obtained.

These values are obtained according to a map stored in advance in the ROM using the engine speed Ne and the fuel injection quantity Qfin as parameters. Alternatively, the values may be calculated according to an arithmetic expression (arithmetic expression stored in advance in the ROM) using the engine speed Ne and the fuel injection quantity Qfin as variables.

The base injection time Ainj is an injection timing in the main injection from the injector 23 set according to the current engine speed Ne and the current fuel injection quantity Qfin. The target oxygen density $O_2$trg is an oxygen density inside the cylinder necessary for obtaining the ideal heat generation rate waveform described above, and is defined as a target oxygen density at the end of the physical ignition delay period of fuel. The base target boost pressure Pimtrg is a boost pressure by the turbocharger 5 set according to the current engine speed Ne and the current fuel injection quantity Qfin, and is set by adjusting the opening degree of the nozzle vane through the operation of the variable nozzle vane mechanism 54. The maxmum boost pressure Pimmax is a maxmum boost pressure by the turbocharger 5, and, for example, is a boost pressure obtained in the case where the opening degree of the nozzle vane is set to the minimum in its movable range in the current engine operation states. The minimum oxygen concentration $O_2$conmin is a minimum oxygen concentration inside the cylinder in its adjustable range adjusted by the EGR device, and, for example, is an oxygen concentration inside the cylinder obtained in the case where the opening degree of the EGR valve 81 is set to the maxmum in the current engine operation states.

After the values are calculated in this manner, the procedure advances to step ST3, where an actual oxygen concentration $O_2$con is calculated. The actual oxygen concentration $O_2$con is an actual oxygen concentration inside the cylinder, and is calculated according to an arithmetic expression (arithmetic expression stored in advance in the ROM; $O_2$con = f(Ga, Pim, Thim)) using the fresh air intake amount Ga, the intake air boost pressure Pim, and the intake air temperature Thim as variables. Alternatively, the actual oxygen concentration $O_2$con may be obtained according to a map using the fresh air intake amount Ga, the intake air boost pressure Pim, and the intake air temperature Thim as parameters.

Next, the procedure advances to step ST4, where a standard crank angle Astd is calculated. The standard crank angle Astd is a time used as a reference for matching an actual oxygen density $O_2$act (described later) with the target oxygen density $O_2$trg, and, in this embodiment, is defined as the end of the physical ignition delay period of fuel injected in the main injection as described above. More specifically, the standard crank angle Astd is calculated according to an arithmetic expression (arithmetic expression stored in advance in the ROM; Astd = g(Ainj, Pcr, $O_2$con)) using the base injection time Ainj, the fuel injection pressure Pcr, and the actual oxygen concentration $O_2$con as variables. Alternatively, the standard crank angle Astd may be obtained according to a map using the base injection time Ainj, the fuel injection pressure Pcr, and the actual oxygen concentration $O_2$con as parameters.

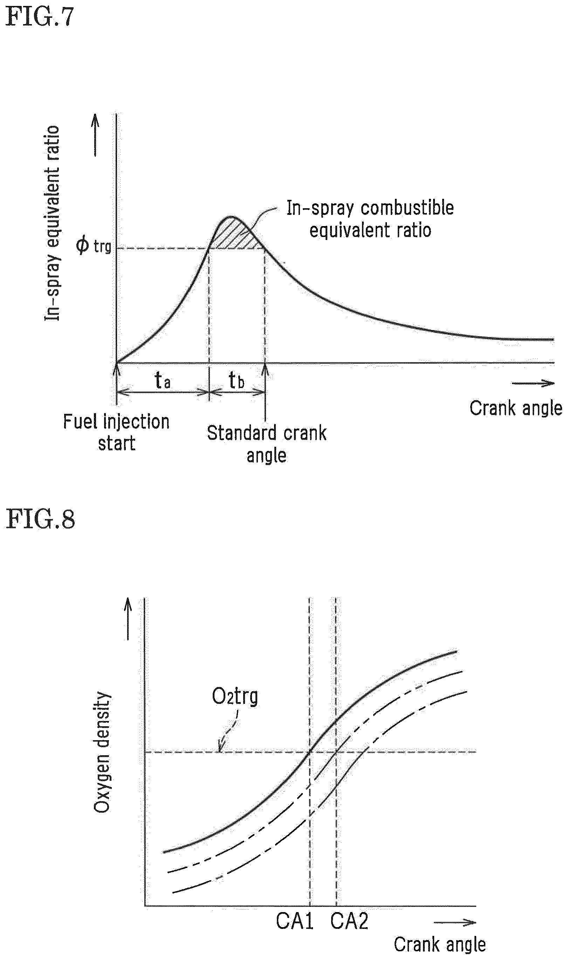

Furthermore, the end of the physical ignition delay period of fuel may be obtained using the following technique. This technique is described in Application No. PCT/JP2010/067548, and is to estimate the end of the physical ignition delay period based on the equivalent ratio in a fuel spray. Hereinafter, a specific description will be given with reference to FIG. 7. FIG. 7 is a graph showing a change in the equivalent ratio in a fuel spray (hereinafter, referred to as an "in-spray equivalent ratio") after the fuel injection is started. In FIG. 7, a period from when the fuel injection is started, and the in-spray equivalent ratio of the injected fuel reaches an ignitable value (in-spray combustible equivalent ratio $\varphi_{trg}$ (e.g., 0.7)) and the combustible vapor amount in the spray (in-spray combustible vapor amount) reaches an ignitable value (minimal required combustible vapor amount), to when the in-spray equivalent ratio is lowered to the in-spray combustible equivalent ratio or less is taken as the physical ignition delay period, and the time at which this in-spray equivalent ratio is lowered to the in-spray combustible equivalent ratio or less is estimated as the end of the physical ignition delay period (the standard crank angle Astd). The in-spray combustible equivalent ratio $\varphi_{trg}$ is not limited to the above-described value. In the case where the in-spray equivalent ratio changes as shown in FIG. 7, a period from when the fuel injection is started to when the in-spray equivalent ratio reaches the in-spray combustible equivalent ratio $\varphi_{trg}$ is referred to as ta in the graph, a period from the end of ta to when the in-spray equivalent ratio is lowered to the in-spray combustible equivalent ratio $\varphi_{trg}$ is referred to as tb in the graph, and the sum of these periods (ta + tb) is calculated as the physical ignition delay period. The end of the period tb is estimated as the end of the physical ignition delay period. Specifically, the in-spray equivalent ratio is calculated based on a value obtained by dividing the amount of fuel in a spray (the amount obtained by dividing the amount of fuel obtained from the instructed fuel injection quantity by the number of injection ports) by the volume of that spray. Furthermore, the volume of the spray can be calculated according to a well known arithmetic expression ("Hiroyasu's equation", etc.).

After the standard crank angle Astd is calculated in this manner, the procedure advances to step ST5, where an actual oxygen density $O_2$act is calculated. The actual oxygen density $O_2$act is an actual oxygen density inside the cylinder, and is calculated according to an arithmetic expression (arithmetic expression stored in advance in the ROM; $O_2$act = h(Astd, $O_2$con, Pim)) using the standard crank angle Astd, the actual oxygen concentration $O_2$con, and the intake air boost pressure Pim as variables. Alternatively, the actual oxygen density $O_2$act may be obtained according to a map using the standard crank angle Astd, the actual oxygen concentration $O_2$con, and the intake air boost pressure Pim as parameters.

After the actual oxygen density $O_2$act is calculated in this manner, the procedure advances to step ST6, where a target boost pressure correction amount Pimad is calculated. The target boost pressure correction amount Pimad is a correction amount of the boost pressure obtained in order to match the actual oxygen density $O_2$act with the target oxygen density $O_2$trg at the end of the physical ignition delay period of fuel, and is calculated as follows. First, the target oxygen density $O_2$trg is subtracted from the actual oxygen density $O_2$act, and, thus, an oxygen density difference $O_2$dltp is obtained ($O_2$dlp = $O_2$act-$O_2$trg). The oxygen density difference $O_2$dltp is calculated as a value corresponding to a deficiency of the oxygen density inside the cylinder. Then, the target boost pressure correction amount Pimad is calculated according to an arithmetic expression (arithmetic expression stored in advance in the ROM; Pimad = j($O_2$dltp)) using the oxygen density difference $O_2$dltp as a variable. Alternatively, the target boost pressure correction amount Pimad may be obtained according to a map using the oxygen density difference $O_2$dltp as a parameter.

Next, the procedure advances to step ST7, where a corrected target boost pressure Pimtrgf is calculated. The corrected target boost pressure Pimtrg is a corrected target boost pressure of intake air corrected with the target boost pressure correction amount Pimad, and is calculated according to Arithmetic Expression (1) below using the intake air boost pressure Pim, the target boost pressure correction amount Pimad, the base target boost pressure Pimtrg, and the maxmum boost pressure Pimmax as variables.

$$Pimtrgf = min(max(Pim+Pimad, Pimtrg), Pimmax) \dots (1)$$

That is to say, a larger value of the sum of the intake air boost pressure Pim and the target boost pressure correction amount Pimad and the base target boost pressure Pimtrg is obtained by comparison, and a smaller value of that value and the maxmum boost pressure Pimmax obtained by comparison is taken as the corrected target boost pressure Pimtrgf.

Alternatively, the corrected target boost pressure Pimtrgf may be obtained according to a map using the intake air boost pressure Pim, the target boost pressure correction amount Pimad, the base target boost pressure Pimtrg, and the maxmum boost pressure Pimmax as parameters.

Then, the procedure advances to step ST8, where a boost pressure-corrected oxygen density $O_2hw$ is calculated. The boost pressure-corrected oxygen density $O_2hw$ is an oxygen density inside the cylinder in the case where it is assumed that the boost pressure has been adjusted to the corrected target boost pressure Pimtrgf (the oxygen density obtained at this stage is an estimated value because the boost pressure has not been actually corrected yet), and is calculated according to an arithmetic expression (arithmetic expression stored in advance in the ROM; $O_2hw = k(Astd, O_2con, Pimtrgf)$) using the standard crank angle Astd, the actual oxygen concentration $O_2con$, and the corrected target boost pressure Pimtrgf as variables. Alternatively, the boost pressure-corrected oxygen density $O_2hw$ may be obtained according to a map using the standard crank angle Astd, the actual oxygen concentration $O_2con$, and the corrected target boost pressure Pimtrgf as parameters.

If the thus calculated boost pressure-corrected oxygen density $O_2hw$ matches the target oxygen density $O_2trg$ (if it is estimated that they match each other), both the correction amount of the EGR rate and the correction amount of the fuel injection time in steps ST9 to ST13 described later become "0". On the other hand, if the boost pressure-corrected oxygen density $O_2hw$ does not match the target oxygen density $O_2trg$ (if it is estimated that they do not match each other), for example, if the boost pressure-corrected oxygen density $O_2hw$ does not reach the target oxygen density $O_2trg$ due to the boost limitation of the turbocharger 5 (limitation in the number of rotations, thermal limitation, and limitation in the nozzle vane opening degree), first, a correction amount of the EGR rate is calculated, and, in the case where, if it is assumed that the EGR rate is corrected with this calculated correction amount of the EGR rate, the actual oxygen density after the correction (an EGR-corrected oxygen density $O_2hwe$ described later) matches the target oxygen density $O_2trg$ (if it is estimated that they match each other), the correction amount of the fuel injection time becomes "0". On the other hand, if the actual oxygen density after the correction does not match the target oxygen density $O_2trg$ (if it is estimated that they do not match each other), the correction value of the fuel injection time will be calculated.

Basically, the EGR rate is controlled such that the oxygen concentration inside the cylinder is kept at a predetermined value (kept at a predetermined value according to the EGR map), and, thus, if the oxygen density inside the cylinder is adjusted by correcting the boost pressure, and the oxygen concentration inside the cylinder changes according to this adjustment, control is performed such that this change is cancelled (the opening degree of the EGR valve 81 is controlled). For example, if the oxygen density inside the cylinder is increased by correcting the boost pressure, and the oxygen concentration inside the cylinder increases, the opening degree of the EGR valve 81 is controlled to a larger value, and, thus, the oxygen concentration is kept constant. Accordingly, in the correction of the EGR rate described later, the correction amount is obtained using as a reference the EGR rate adjusted such that the oxygen concentration is kept constant (an estimated value of the EGR rate that changes according to a change in boost pressure according to the corrected target boost pressure Pimtrgf). Hereinafter, correction of the EGR rate and correction of the fuel injection time will be described.

First, in step ST9, an oxygen concentration target value $O_2contrgf$ is calculated. The oxygen concentration target value $O_2contrgf$ is a target oxygen concentration obtained in order to match the actual oxygen density $O_2act$ with the target oxygen density $O_2trg$ at the end of the physical ignition delay period of fuel, and is calculated as follows. First, the target oxygen density $O_2trg$ is subtracted from the boost pressure-corrected oxygen density $O_2hw$, and, thus, an oxygen density difference $O_2dlte$ is obtained ($O_2dlte = O_2hw-O_2trg$). The oxygen density difference $O_2dlte$ is calculated as a value corresponding to a deficiency of the oxygen density inside the cylinder in the case where it is assumed that the boost pressure has been corrected with the target boost pressure correction amount Pimad. Then, the oxygen concentration target value $O_2contrgf$ is calculated according to Arithmetic Expression (2) below using the oxygen density difference $O_2dlte$, the actual oxygen concentration $O_2con$, the in-air oxygen mass ratio (0.23), and the minimum oxygen concentration $O_2conmin$ as variables.

$$O_2contrgf = max(min(m(O_2dlte)+O_2con, 0.23), O_2conmin) \dots (2)$$

That is to say, a smaller value of the sum of the value calculated according to the arithmetic expression in which the oxygen density difference $O_2dlte$ is used as a variable and the actual oxygen concentration $O_2con$, and "0.23", is obtained by comparison, and a larger value of that value and the minimum oxygen concentration $O_2conmin$ is obtained as the oxygen concentration target value $O_2contrgf$.

Alternatively, the oxygen concentration target value $O_2contrgf$ may be obtained according to a map using the oxygen density difference $O_2dlte$, the actual oxygen concentration $O_2con$, the in-air oxygen mass ratio, and the minimum oxygen concentration $O_2conmin$ as parameters.

Then, the procedure advances to step ST10, where a corrected target EGR rate Egrtrgf is calculated. The corrected target EGR rate Egrtrgf is a target EGR rate for obtaining a correction amount of the oxygen concentration in order to obtain the oxygen concentration target value $O_2contrgf$, and is calculated according to an arithmetic expression (arithmetic expression stored in advance in the ROM; $Egrtrgf = n(O_2contrgf, Ne, Qfin)$) using the oxygen concentration

target value $O_2$contrgf, the engine speed Ne, and the fuel injection quantity Qfin as variables. Alternatively, the corrected target EGR rate Egrtrgf may be obtained according to a map using the oxygen concentration target value $O_2$contrgf, the engine speed Ne, and the fuel injection quantity Qfin as parameters.

Next, the procedure advances to step ST11, where an EGR-corrected oxygen density $O_2$hwe is calculated. The EGR-corrected oxygen density $O_2$hwe is an oxygen density inside the cylinder in the case where it is assumed that the EGR rate has been adjusted to the corrected target EGR rate Egrtrgf (the oxygen density obtained at this stage is an estimated value because the EGR rate has not been actually corrected yet), and is calculated according to an arithmetic expression (arithmetic expression stored in advance in the ROM; $O_2$hwe = o(Astd, $O_2$contrgf, Egrtrgf)) using the standard crank angle Astd, the oxygen concentration target value $O_2$contrgf, and the corrected target EGR rate Egrtrgf as variables. Alternatively, the EGR-corrected oxygen density $O_2$hwe may be obtained according to a map using the standard crank angle Astd, the oxygen concentration target value $O_2$contrgf, and the corrected target EGR rate Egrtrgf as parameters.

Next, the procedure advances to step ST12, where a standard crank angle correction amount Acomp is calculated. The standard crank angle correction amount Acomp is a correction amount for correcting the end of the physical ignition delay period, which is the standard crank angle, with the fuel consuming timing, and is calculated as follows. First, the target oxygen density $O_2$trg is subtracted from the EGR-corrected oxygen density $O_2$hwe, and, thus, an oxygen density difference $O_2$dlta is obtained ($O_2$dlta = $O_2$hwe-$O_2$trg). The oxygen density difference $O_2$dlta is calculated as a value corresponding to a deficiency of the oxygen density inside the cylinder in the case where it is assumed that the boost pressure and the EGR rate have been corrected. Then, the standard crank angle correction amount Acomp is calculated according to an arithmetic expression (arithmetic expression stored in advance in the ROM; Acomp = p($O_2$dlta)) using the oxygen density difference $O_2$dlta as a variable. Alternatively, the standard crank angle correction amount Acomp may be obtained according to a map using the oxygen density difference $O_2$dlta as a parameter. At that time, the standard crank angle correction amount Acomp is calculated as a value corresponding to a deficiency of the oxygen density inside the cylinder after the boost pressure and the EGR rate are corrected.

Next, the procedure advances to step ST13, where a corrected injection time Ainjf is calculated. The corrected injection time Ainjf is a fuel consuming timing in the case where the fuel consuming timing has been corrected with the standard crank angle correction amount Acomp, and is calculated according to an arithmetic expression (arithmetic expression stored in advance in the ROM; Ainjf = q(Acomp, Ainj, Pcr, $O_2$contrgf)) using the standard crank angle correction amount Acomp, the base injection time Ainj, the fuel injection pressure Pcr, and the oxygen concentration target value $O_2$contrgf as variables. Alternatively, the corrected injection time Ainjf may be obtained according to a map using the standard crank angle correction amount Acomp, the base injection time Ainj, the fuel injection pressure Pcr, and the oxygen concentration target value $O_2$contrgf as parameters.

The thus calculated corrected injection time Ainjf is for setting the end of the physical ignition delay period of fuel injected in the main injection to a crank angle position that has been corrected with the standard crank angle correction amount Acomp. If the main injection is performed according to the corrected injection time Ainjf, the end of the physical ignition delay period of fuel matches the crank angle position that has been corrected with the standard crank angle correction amount Acomp. More specifically, if the oxygen density inside the cylinder is low, the end of the physical ignition delay period of fuel is changed such that the volume inside the cylinder is reduced, and the oxygen density at the end of the physical ignition delay period of fuel is increased. That is to say, if the end of the physical ignition delay period before correction is on the angle of advance side of the compression top dead center (TDC) of the piston 13, a correction amount toward the angle of delay side is calculated as the standard crank angle correction amount Acomp, and the corrected injection time Ainjf is set on the angle of delay side. On the other hand, if the end of the physical ignition delay period before correction is on the angle of delay side of the compression top dead center (TDC) of the piston 13, a correction amount toward the angle of advance side is calculated as the standard crank angle correction amount Acomp, and the corrected injection time Ainjf is set on the angle of advance side.

The correction of the thus calculated control parameters (the boost pressure, the EGR rate, and the fuel injection time) can be reflected on an intake stroke and a combustion stroke in a next cylinder that performs the combustion stroke after the above-described cylinder for which the end of the physical ignition delay period has been calculated, or can be reflected on correction of the control parameters in a next intake stroke and a next combustion stroke (the 4th intake stroke and the 4th combustion stroke after the current ones in the case of a four-cylinder engine) in the same cylinder (cylinder for which the end of the physical ignition delay period has been calculated). Furthermore, by estimating the end of the physical ignition delay period from the gas state at the time of closing the intake valve 16 and the fuel injection modes into that cylinder, reflection may be made on the control parameters in the intake stroke and the combustion stroke of that cylinder (cylinder for which the end of the physical ignition delay period has been estimated).

FIG. 8 is a graph for illustrating a change in oxygen density with respect to the crank angle when controlling the oxygen density. FIG. 8 shows an example of a change in oxygen concentration inside the cylinder according to a change in crank angle. In the graph, the timing CA1 refers to the crank angle at the end of the physical ignition delay period of fuel, and $O_2$trg refers to the target oxygen density. In correction of the boost pressure and correction of the EGR rate during the oxygen density control, the change waveform of the oxygen density in FIG. 8 is shifted in directions along the vertical axis. For example, in a state where the oxygen density changes as indicated by the dashed dotted line in the graph (state in which there is a deficiency of the oxygen density at the timing CA1), the oxygen density at the timing CA1 is increased by correcting the boost pressure, thereby providing a state indicated by the dashed double dotted line in the graph, and the oxygen density at the timing CA1 is further increased by correcting the EGR rate in that state, thereby providing a state indicated by the solid line in the graph. Accordingly, the oxygen density at the timing CA1 can match the target oxygen density.

Furthermore, if the state indicated by the solid line in the graph can be achieved merely due to correction of the boost pressure in the state where the oxygen density changes as indicated by the dashed dotted line in the graph, the EGR rate and the fuel injection time will not be corrected.

Furthermore, if the oxygen density at the timing CA1 does not match the target oxygen density, for example, in the case of the state indicated by the dashed double dotted line in the graph, even with the correction of the boost pressure and the EGR rate, the end of the physical ignition delay period is changed by correcting the fuel injection time, for example, that time is shifted from the timing CA1 to the timing CA2 in the graph, and, thus, the oxygen density at the timing CA2 (the end of the physical ignition delay period) can match the target oxygen density.

As described above, in this embodiment, the operation that corrects the boost pressure, the EGR rate, and the fuel injection time according to the priority order is repeated, and, thus, the actual oxygen density $O_2act$ at the end of the physical ignition delay period of fuel injected in the main injection matches the target oxygen density $O_2trg$. Accordingly, good ignitability of fuel injected in the main injection can be obtained, and an ideal combustion state (e.g., a combustion state in which the heat generation rate waveform as shown in FIG. 4 is obtained) can be obtained. As a result, it is possible to concurrently satisfy requests to improve exhaust emissions by reducing the amount of NOx generated and the amount of smoke generated, to reduce combustion noise during the combustion stroke, to sufficiently secure an engine torque, to improve the fuel consumption rate, and the like.

Second Embodiment

Next, a second embodiment will be described. The second embodiment is to bring the actual oxygen density $O_2act$ close to the target oxygen density $O_2trg$ in consideration of a boost delay (so-called turbo lag) in the case of giving an instruction to correct the boost pressure, in order to match the actual oxygen density $O_2act$ with the target oxygen density $O_2trg$ as described above.

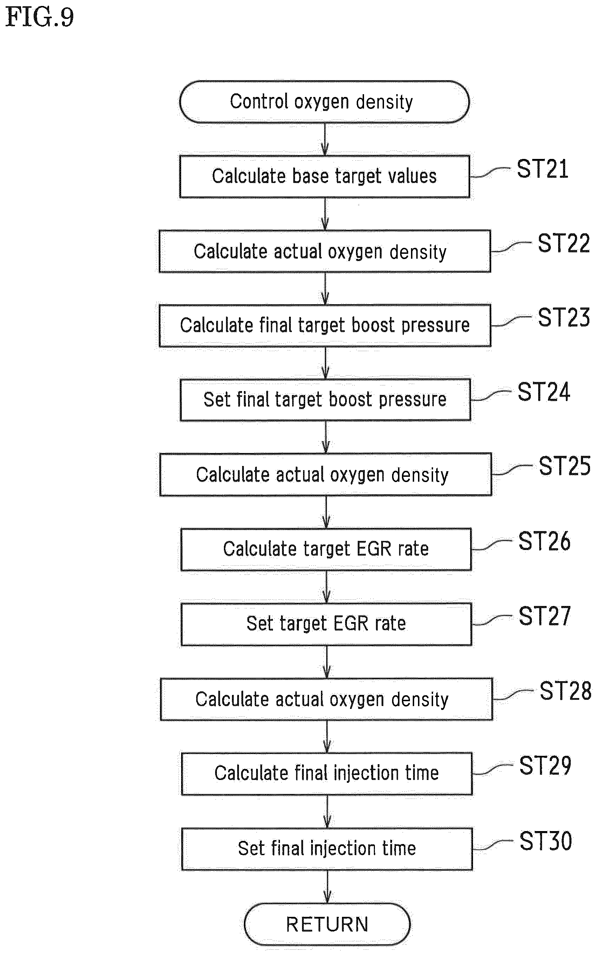

FIGS. 9 to 14 are flowcharts showing a procedure for controlling the oxygen density according to this embodiment. The procedure in these flowcharts is performed repeatedly every few milliseconds or every time a combustion stroke is performed after the engine 1 is started.

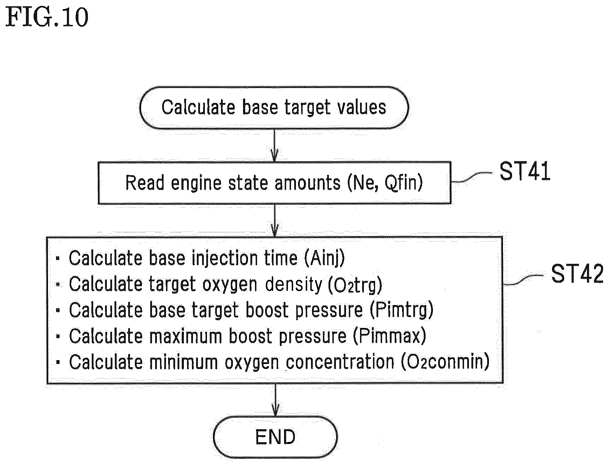

First, in step ST21 (FIG. 9), base target values are calculated. The operation that calculates the base target values are shown in detail in the flowchart in FIG. 10. In the flowchart in FIG. 10, first, in step ST41, state amounts of the engine 1 are read. More specifically, the engine speed Ne and the fuel injection quantity Qfin are read.

Subsequently, the procedure advances to step ST42, where a base injection time Ainj, a target oxygen density $O_2trg$, a base target boost pressure Pimtrg, a maximum boost pressure Pimmax, and a minimum oxygen concentration $O_2conmin$ are obtained. These values are calculated as in step ST2 of the flowchart shown in FIG. 5 in the first embodiment described above.

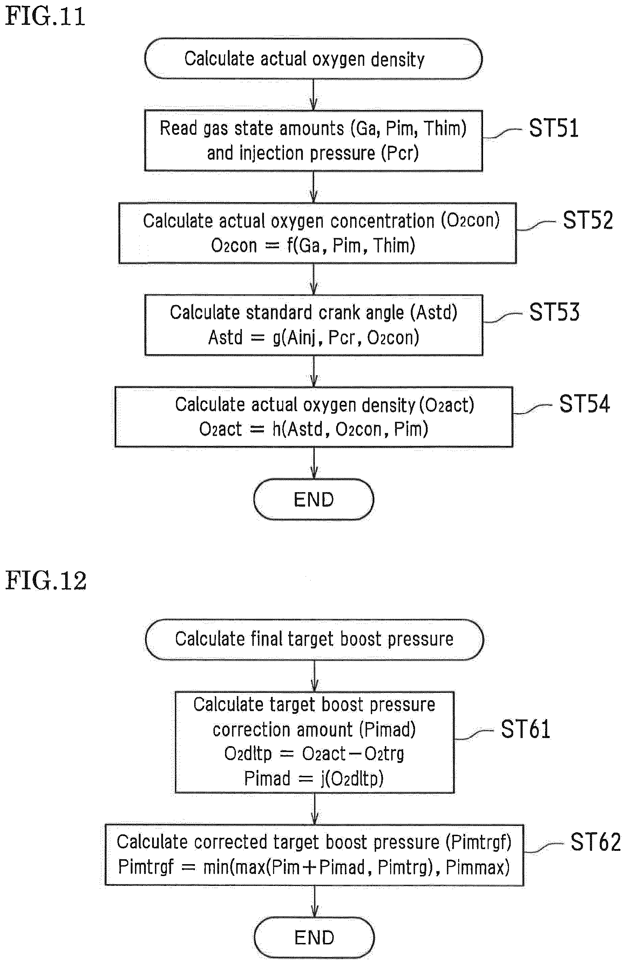

After the base target values are calculated, the procedure advances to step ST22 (FIG. 9), where an actual oxygen density is calculated. The operation that calculates the actual oxygen density is shown in detail in the flowchart in FIG. 11. In the flowchart in FIG. 11, first, in step ST51, gas state amounts inside the cylinder are read. More specifically, the fresh air intake amount Ga, the intake air boost pressure Pim, the intake air temperature Thim, and the fuel injection pressure Pcr are read.

Subsequently, the procedure advances to step ST52, where an actual oxygen concentration $O_2con$ is calculated. The actual oxygen concentration $O_2con$ is calculated as in step ST3 of the flowchart shown in FIG. 5 in the first embodiment described above.

Furthermore, in step ST53, a standard crank angle Astd is calculated. The standard crank angle Astd is calculated as in step ST4 of the flowchart shown in FIG. 5 in the first embodiment described above.

Furthermore, in step ST54, an actual oxygen density $O_2act$ is calculated. The actual oxygen density $O_2act$ is calculated as in step ST5 of the flowchart shown in FIG. 5 in the first embodiment described above.

After the actual oxygen density is calculated, the procedure advances to step ST23 (FIG. 9), where a final target boost pressure is calculated. The operation that calculates the final target boost pressure is shown in detail in the flowchart in FIG. 12. In the flowchart in FIG. 12, first, in step ST61, a target boost pressure correction amount Pimad is calculated. The target boost pressure correction amount Pimad is calculated as in step ST6 of the flowchart shown in FIG. 5 in the first embodiment described above.

Furthermore, in step ST62, a corrected target boost pressure Pimtrgf is calculated. The corrected target boost pressure Pimtrgf is calculated as in step ST7 of the flowchart shown in FIG. 5 in the first embodiment described above.

After the final target boost pressure is calculated, the procedure advances to step ST24 (FIG. 9), where the final target boost pressure is set (the boost pressure is corrected).

Subsequently, the procedure advances to step ST25, where an actual oxygen density in the case where boosting of intake air is performed at the set final target boost pressure is calculated. The actual oxygen density is calculated as in step ST8 of the flowchart shown in FIG. 5 in the first embodiment described above.

At that time, if there is a boost delay in the turbocharger 5, there is a delay also in the actual oxygen density calculated in the actual oxygen density calculating operation according to the boost delay. Accordingly, regarding the correction of the EGR rate and the correction of the fuel injection time described below, correction values are calculated in consideration of a delay in a change in actual oxygen density (increase in actual oxygen density) according to the boost delay in the turbocharger 5. Hereinafter, a specific description will be given.

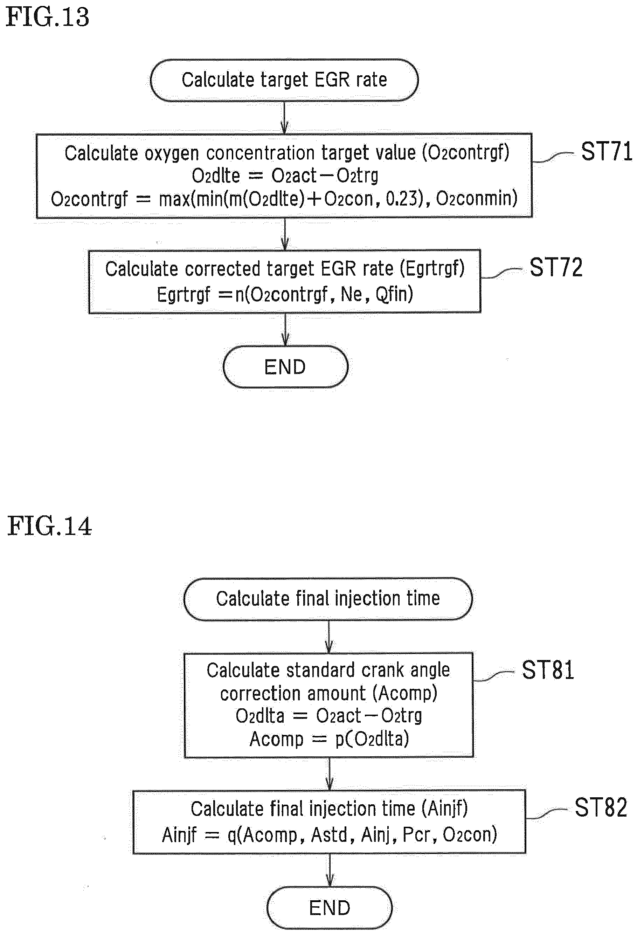

In step ST26, a target EGR rate is calculated. The operation that calculates the target EGR rate is shown in detail in the flowchart in FIG. 13. In the flowchart in FIG. 13, first, in step ST71, an oxygen concentration target value $O_2$contrgf is calculated. The oxygen concentration target value $O_2$contrgf is a target oxygen concentration obtained in order to match the actual oxygen density $O_2$act with the target oxygen density $O_2$trg at the end of the physical ignition delay period of fuel, and is calculated as follows. First, the target oxygen density $O_2$trg is subtracted from the actual oxygen density $O_2$act, and, thus, an oxygen density difference $O_2$dlte is obtained ($O_2$dlte = $O_2$act-$O_2$trg). The oxygen density difference $O_2$dlte is calculated as a value corresponding to a deficiency of the oxygen density inside the cylinder in the case where the boost pressure described above has been corrected (deficiency including a delay in a change in oxygen density). Then, the oxygen concentration target value $O_2$contrgf is calculated according to Arithmetic Expression (2) above using the oxygen density difference $O_2$dlte, the actual oxygen concentration $O_2$con, the in-air oxygen mass ratio (0.23), and the minimum oxygen concentration $O_2$conmin as variables.

Alternatively, the oxygen concentration target value $O_2$contrgf may be obtained according to a map using the oxygen density difference $O_2$dlte, the actual oxygen concentration $O_2$con, the in-air oxygen mass ratio, and the minimum oxygen concentration $O_2$conmin as parameters.

Then, the procedure advances to step ST72, where a corrected target EGR rate Egrtrgf is calculated. The corrected target EGR rate Egrtrg is calculated as in step ST10 of the flowchart shown in FIG. 6 in the first embodiment described above.

After the target EGR rate is calculated, the procedure advances to step ST27 (FIG. 9), where the target EGR rate is set (the EGR rate is corrected).

Subsequently, the procedure advances to step ST28, where an actual oxygen density in the case where the exhaust gas is recirculated at the set target EGR rate is calculated. The actual oxygen density is calculated as in step ST11 of the flowchart shown in FIG. 6 in the first embodiment described above.

Subsequently, the procedure advances to step ST29, where a final injection time is calculated. The operation that calculates the final injection time is shown in detail in the flowchart in FIG. 14. In the flowchart in FIG. 14, first, in step ST81, a standard crank angle correction amount Acomp is calculated. The standard crank angle correction amount Acomp is calculated as follows. First, the target oxygen density $O_2$trg is subtracted from the actual oxygen density $O_2$act, and, thus, an oxygen density difference $O_2$dlta is obtained ($O_2$dlta = $O_2$act-$O_2$trg). The oxygen density difference $O_2$dlta is calculated as a value corresponding to a deficiency of the oxygen density inside the cylinder after correcting the boost pressure and the EGR rate as described above. Then, the standard crank angle correction amount Acomp is calculated according to an arithmetic expression (arithmetic expression stored in advance in the ROM; Acomp = p($O_2$dlta)) using the oxygen density difference $O_2$dlta as a variable. Alternatively, the standard crank angle correction amount Acomp may be obtained according to a map using the oxygen density difference $O_2$dlta as a parameter. At that time, the standard crank angle correction amount Acomp is calculated as a value corresponding to a deficiency of the oxygen density inside the cylinder after the boost pressure and the EGR rate are corrected.

Next, the procedure advances to step ST82, where a final injection time Ainjf is calculated. The final injection time Ainjf is calculated according to an arithmetic expression (arithmetic expression stored in advance in the ROM; Ainjf = q(Acomp, Astd, Ainj, Pcr, $O_2$con)) using the standard crank angle correction amount Acomp, the standard crank angle Astd, the base injection time Ainj, the fuel injection pressure Pcr, and the actual oxygen concentration $O_2$con as variables. Alternatively, the corrected injection time Ainjf may be obtained according to a map using the standard crank angle correction amount Acomp, the standard crank angle Astd, the base injection time Ainj, the fuel injection pressure Pcr, and the actual oxygen concentration $O_2$con as parameters.

After the final injection time Ainjf is calculated, the procedure advances to step ST30 (FIG. 9), where the final injection time is set (the injection time is corrected).

The above-described operation is repeated, and, thus, as in the first embodiment, the oxygen density at the end of the physical ignition delay period of fuel injected in the main injection matches the target oxygen density. Accordingly, good ignitability of fuel injected in the main injection can be obtained, and an ideal combustion state can be obtained. As a result, it is possible to concurrently satisfy requests to improve exhaust emissions by reducing the amount of NOx generated and the amount of smoke generated, to reduce combustion noise during the combustion stroke, to sufficiently secure an engine torque, to improve the fuel consumption rate, and the like.

- Other Embodiments -

In the embodiments described above, a case was described in which the present invention is applied to an in-line four-cylinder diesel engine mounted in an automobile. The present invention is not limited to use in an automobile, and is applicable also to engines used in other applications. Also, there is no particular limitation on the number of cylinders or the type of engines (classified as an in-line engine, a V engine, a horizontally opposed engine, etc.).

Furthermore, in the foregoing embodiments, the target oxygen density $O_2$trg is defined with the standard crank angle Astd taken as the end of the physical ignition delay period of fuel injected in the main injection. The standard crank angle Astd is not limited to this, and the standard crank angle Astd may be defined as the angle of advance side or the angle of delay side by a predetermined crank angle with respect to the end of the physical ignition delay period of fuel injected in the main injection, or may be defined using a chemical ignition delay period as a reference. Furthermore, the standard crank angle Astd may be defined as the time at which the crankshaft has rotated by a predetermined crank angle or the time at which a predetermined time has elapsed after the main injection is started.

Furthermore, in the second embodiment, an occurrence of a boost delay in the turbocharger 5 is obtained by calculating the actual oxygen density. However, there is no limitation to this, and an occurrence of a boost delay in the turbocharger 5 may be obtained based on an output signal from the intake pressure sensor 48.

In the foregoing embodiments, the engine 1 was described to which the piezo injector 23 is applied that attains a full valve opening state only when a current is applied thereto and thus changes a fuel injection rate, but the present invention can be applied also to engines to which a variable injection rate injector is applied.

[Industrial Applicability]

The present invention can be applied to the control that optimizes the oxygen density inside a cylinder in a common rail in-cylinder direct injection multi-cylinder diesel engine mounted in an automobile.

[Reference Signs List]

| | |
|---|---|
| 1 | Engine (internal combustion engine) |
| 12 | Cylinder bore |
| 23 | Injector (fuel injection valve) |
| 100 | ECU |
| Astd | Standard crank angle (predetermined time) |
| $O_2$trg | Target oxygen density |
| $O_2$act | Actual oxygen density |
| Pimtrgf | Corrected target boost pressure |
| Egrtrgf | Corrected target EGR rate |
| Ainjf | Corrected injection time |

**Claims**

1. A control apparatus (100) for a compression self-igniting internal combustion engine (1) that performs combustion by self-ignition of fuel injected from a fuel injection valve (23) into a cylinder, **characterized by**:

   target value setting means for performing setting in priority order of target values of a boost pressure of intake air, an exhaust gas recirculation rate, and a fuel injection timing such that an actual oxygen density inside the cylinder at a predetermined time after the fuel is injected, which is an end of a physical ignition delay period of fuel injected in a main injection, is adjusted using a target oxygen density inside the cylinder set in association with the predetermined time as a target value,
   wherein the target value setting means does not correct either the exhaust gas recirculation rate or the fuel injection timing in a case where the actual oxygen density matches the target oxygen density due to correction of the boost pressure of intake air to the target value, corrects the exhaust gas recirculation rate to the target value in a case where the actual oxygen density does not match the target oxygen density even with the correction of the boost pressure of intake air to the target value, does not correct the fuel injection timing in a case where the actual oxygen density matches the target oxygen density due to correction of the exhaust gas recirculation rate to the target value, and corrects the fuel injection timing to the target value in a case where the actual oxygen density does not match the target oxygen density even with the correction of the exhaust gas recirculation rate to the target value, and

wherein the target value setting means sets the target value of the boost pressure of intake air such that the boost pressure of intake air is increased in a case where the actual oxygen density is lower than the target oxygen density, sets the target value of the exhaust gas recirculation rate such that the exhaust gas recirculation rate is reduced in a case where the actual oxygen density is lower than the target oxygen density, and sets the target value of the fuel injection timing such that a volume inside the cylinder at the predetermined time is reduced in a case where the actual oxygen density is lower than the target oxygen density.

2. The control apparatus (100) for an internal combustion engine (1) according to claim 1,
wherein the end of the physical ignition delay period is obtained based on a fuel injection timing, a fuel injection pressure, an intake air amount, an intake air pressure, and an intake air temperature.

3. The control apparatus (100) for an internal combustion engine (1) according to claim 1,
wherein the end of the physical ignition delay period is obtained as a time at which an in-spray equivalent ratio of the injected fuel that has exceeded a predetermined in-spray combustible equivalent ratio that is a value when the in-spray equivalent ratio of the injected fuel reaches an ignitable value after the fuel injection is started, is lowered to the in-spray combustible equivalent ratio.

4. The control apparatus (100) for an internal combustion engine (1) according to any one of claims 1 to 4,
wherein, when correcting the boost pressure of intake air to the target value, the target value setting means changes the exhaust gas recirculation rate according to a delay until the boost pressure of intake air reaches the target value.

5. The control apparatus (100) for an internal combustion engine (1) according to claim 4,
wherein, the greater the delay until the boost pressure of intake air reaches the target value, the smaller the exhaust gas recirculation rate the target value setting means sets.

## Patentansprüche

1. Steuerungsvorrichtung (100) für eine Verdichtungsselbstzünderbrennkraftmaschine (1), die eine Verbrennung durch Selbstzündung von Kraftstoff durchführt, der von einem Kraftstoffeinspritzventil (23) in einen Zylinder eingespritzt wird, **gekennzeichnet durch**:

eine Sollwertfestlegungseinrichtung zum Durchführen einer Festlegung in einer Prioritätsreihenfolge von Sollwerten eines Ladedrucks von Einlassluft, einer Abgasrückführungsrate und einer Kraftstoffeinspritzzeitabstimmung, sodass eine tatsächliche Sauerstoffdichte innerhalb des Zylinders zu einem vorbestimmten Zeitpunkt nachdem der Kraftstoff eingespritzt wird, der ein Ende einer physikalischen Zündverzögerungszeitspanne von in einer Haupteinspritzung eingespritzten Kraftstoff ist, unter Verwendung einer Sollsauerstoffdichte innerhalb des Zylinders eingestellt wird, die in Verbindung mit dem vorbestimmten Zeitpunkt als ein Sollwert festgelegt wird, wobei die Sollwertfestlegungseinrichtung weder die Abgasrückführungsrate noch die Kraftstoffeinspritzzeitabstimmung in einem Fall korrigiert, in dem die tatsächlich Sauerstoffdichte mit der Sollsauerstoffdichte aufgrund einer Korrektur des Ladedrucks von Einlassluft auf den Sollwert übereinstimmt, die Abgasrückführungsrate auf den Sollwert in einem Fall korrigiert, in dem die tatsächliche Sauerstoffdichte selbst mit der Korrektur des Ladedrucks von Einlassluft auf den Sollwert nicht mit der Sollsauerstoffdichte übereinstimmt, die Kraftstoffeinspritzzeitabstimmung in einem Fall nicht korrigiert, in dem die tatsächliche Sauerstoffdichte mit der Sollsauerstoffdichte aufgrund einer Korrektur der Abgasrückführungsrate auf den Sollwert übereinstimmt, und die Kraftstoffeinspritzzeitabstimmung auf den Sollwert in einem Fall korrigiert, in dem die tatsächliche Sauerstoffdichte selbst mit der Korrektur der Abgasrückführungsrate auf den Sollwert nicht mit der Sollsauerstoffdichte übereinstimmt, und

wobei die Sollwertfestlegungseinrichtung den Sollwert des Ladedrucks von Einlassluft derart festgelegt, dass der Ladedruck von Einlassluft in einem Fall zunimmt, in dem die tatsächliche Sauerstoffdichte niedriger als die Sollsauerstoffdichte ist, den Sollwert der Abgasrückführungsrate derart festlegt, dass die Abgasrückführungsrate in einem Fall abnimmt, in dem die tatsächliche Sauerstoffdichte niedriger als die Sollsauerstoffdichte ist, und den Sollwert der Kraftstoffeinspritzzeitabstimmung derart festlegt, dass ein Volumen innerhalb des Zylinders zu dem vorbestimmten Zeitpunkt in einem Fall reduziert ist, in dem die tatsächliche Sauerstoffdichte niedriger als die Sollsauerstoffdichte ist.

**2.** Steuerungsvorrichtung (100) für eine Brennkraftmaschine (1) gemäß Anspruch 1,
wobei das Ende der physikalischen Zündverzögerungszeitspanne basierend auf einer Kraftstoffeinspritzzeitabstimmung, einem Kraftstoffeinspritzdruck, einer Einlassluftmenge, einem Einlassluftdruck und einer Einlasslufttemperatur erlangt wird.

**3.** Steuerungsvorrichtung (100) für eine Brennkraftmaschine (1) gemäß Anspruch 1,
wobei das Ende der physikalischen Zündverzögerungszeitspanne als ein Zeitpunkt erlangt wird, an dem ein Einsprüh-Äquivalenzverhältnis des eingespritzten Kraftstoffs, das ein vorbestimmtes brennbares Einsprüh-Äquivalenzverhältnis überschritten hat, das ein Wert ist, wenn das Einsprüh-Äquivalenzverhältnis des eingespritzten Kraftstoffes nachdem die Kraftstoffeinspritzung beginnt einen entzündbaren Wert erreicht, auf das brennbare Einsprüh-Äquivalenzverhältnis gesenkt ist.

**4.** Steuerungsvorrichtung (100) für eine Brennkraftmaschine (1) gemäß einem der Ansprüche 1 bis 4,
wobei, wenn der Ladedruck von Einlassluft auf den Sollwert korrigiert wird, die Sollwertfestlegungseinrichtung die Abgasrückführungsrate gemäß einer Verzögerung, bis der Ladedruck von Einlassluft den Sollwert erreicht, ändert.

**5.** Steuerungsvorrichtung (100) für eine Brennkraftmaschine (1) gemäß Anspruch 4,
wobei, je größer die Verzögerung ist, bis der Ladedruck von Einlassluft den Sollwert erreicht, die Sollwertfestlegungseinrichtung die Abgasrückführungsrate desto kleiner festlegt.

**Revendications**

**1.** Appareil de commande (100) pour un moteur à combustion interne à autoallumage par compression (1) qui réalise la combustion par autoallumage du carburant injecté à partir d'une soupape d'injection de carburant (23) dans un cylindre, **caractérisé par** :

un moyen de réglage de valeur cible pour réaliser le réglage dans l'ordre de priorité des valeurs cibles d'une pression de suralimentation d'air d'admission, d'un taux de recyclage de gaz d'échappement, et d'un calage d'injection de carburant de sorte qu'une véritable densité d'oxygène à l'intérieur du cylindre à un moment prédéterminé après que le carburant a été injecté, qui est une fin d'une période de retard d'allumage physique de carburant injecté dans une injection principale, est ajustée à l'aide d'une densité d'oxygène cible à l'intérieur du cylindre réglée en association avec le moment prédéterminé en tant que valeur cible,
dans lequel le moyen de réglage de valeur cible ne corrige pas le taux de recyclage de gaz d'échappement ni le calage d'injection de carburant dans un cas dans lequel la véritable densité d'oxygène correspond à la densité d'oxygène cible due à la correction de la pression de suralimentation d'air d'admission par rapport à la valeur cible, corrige le taux de recyclage de gaz d'échappement par rapport à la valeur cible dans un cas dans lequel la véritable densité d'oxygène ne correspond pas à la densité d'oxygène cible même avec la correction de la pression de suralimentation d'air d'admission par rapport à la valeur cible, ne corrige pas le calage d'injection de carburant dans un cas dans lequel la véritable densité d'oxygène correspond à la densité d'oxygène cible due à la correction du taux de recyclage de gaz d'échappement par rapport à la valeur cible, et corrige le calage d'injection de carburant par rapport à la valeur cible lorsque la véritable densité d'oxygène ne correspond pas à la densité d'oxygène cible même avec la correction du taux de recyclage de gaz d'échappement partie de recouvrement par rapport à la valeur cible, et
dans lequel le moyen de réglage de valeur cible règle la valeur cible de la pression de suralimentation d'air d'admission de sorte que la pression de suralimentation d'air d'admission est augmentée dans un cas dans lequel la véritable densité d'oxygène est inférieure à la densité d'oxygène cible, règle la valeur cible du taux de recyclage de gaz d'échappement de sorte que le taux de recyclage de gaz d'échappement est réduit dans un cas dans lequel la véritable densité d'oxygène est inférieure à la densité d'oxygène cible, et règle la valeur cible du calage d'injection de carburant de sorte qu'un volume à l'intérieur du cylindre au moment prédéterminé est réduit dans un cas dans lequel la véritable densité d'oxygène est inférieure à la densité d'oxygène cible.

**2.** Appareil de commande (100) pour un moteur à combustion interne (1) selon la revendication 1,
dans lequel la fin de la période de retard d'allumage physique est obtenue en fonction d'un calage d'injection de carburant, d'une pression d'injection de carburant, d'une quantité d'air d'admission, d'une pression d'air d'admission et d'une température d'air d'admission.

3. Appareil de commande (100) pour un moteur à combustion interne (1) selon la revendication 1, dans lequel la fin de la période de retard d'allumage physique est obtenue comme étant un moment auquel un rapport équivalent en pulvérisation du carburant injecté qui a dépassé un rapport équivalent de combustible en pulvérisation prédéterminé qui est une valeur lorsque le rapport équivalent en pulvérisation du carburant injecté atteint une valeur pouvant être allumée après que l'injection de carburant a démarré, est abaissée au rapport équivalent de combustion en pulvérisation.

4. Appareil de commande (100) pour un moteur à combustion interne (1) selon l'une quelconque des revendications 1 à 4, dans lequel, lors de la correction de la pression de suralimentation d'air d'admission par rapport à la valeur cible, le moyen de réglage de valeur cible modifie le rapport de recyclage de gaz d'échappement selon un retard jusqu'à ce que la pression de suralimentation d'air d'admission atteigne la valeur cible.

5. Appareil de commande (100) pour un moteur à combustion interne (1) selon la revendication 4, dans lequel, plus le retard jusqu'à ce que la pression de suralimentation d'air d'admission atteigne la valeur cible est important, plus le taux de recyclage de gaz d'échappement que le moyen de réglage de valeur cible règle est faible.

FIG.1

FIG.2

## FIG.3

100

| 40 | Crank position sensor |
| 41 | Rail pressure sensor |
| 42 | Throttle position sensor |
| 43 | Airflow meter |
| 44 | A/F sensor |
| 45 | Exhaust temperature sensor |
| 46 | Water temperature sensor |
| 47 | Accelerator position sensor |
| 48 | Intake pressure sensor |
| 49 | Intake temperature sensor |

E C U

| Supply pump | 21 |
| Injector | 23 |
| Variable nozzle vane mechanism | 54 |
| Throttle valve | 62 |
| EGR valve | 81 |

# FIG.4

Heat generation rate

Heat generation
rate waveform
by main injection

Heat generation
rate waveform
by pilot injection

TDC    ATDC10°
(Combustion centroid)

Crank angle

Fuel injection rate

Main injection

Pilot injection

TDC

Crank angle

## FIG.5

```
           ( Control oxygen density )
                      │
                      ▼
┌──────────────────────────────────────────────────┐      ST1
│ Read engine state amounts (Ne, Qfin, Pim, Thim,   │
│ Pcr, Ga)                                           │
└──────────────────────────────────────────────────┘
                      │
                      ▼
┌──────────────────────────────────────────────────┐      ST2
│ · Calculate base injection time (Ainj)            │
│ · Calculate target oxygen density (O2trg)         │
│ · Calculate base target boost pressure (Pimtrg)   │
│ · Calculate maximum boost pressure (Pimmax)       │
│ · Calculate minimum oxygen concentration          │
│   (O2conmin)                                       │
└──────────────────────────────────────────────────┘
                      │
                      ▼
┌──────────────────────────────────────────────────┐      ST3
│ Calculate actual oxygen concentration (O2con)     │
│ (O2con) = f(Ga, Pim, Thim)                         │
└──────────────────────────────────────────────────┘
                      │
                      ▼
┌──────────────────────────────────────────────────┐      ST4
│ Calculate standard crank angle (Astd)             │
│ Astd = g(Ainj, Pcr, O2con)                         │
└──────────────────────────────────────────────────┘
                      │
                      ▼
┌──────────────────────────────────────────────────┐      ST5
│ Calculate actual oxygen density (O2act)           │
│ (O2act) = h(Astd, O2con, Pim)                      │
└──────────────────────────────────────────────────┘
                      │
                      ▼
┌──────────────────────────────────────────────────┐      ST6
│ Calculate target boost pressure correction amount │
│ (Pimad)                                            │
│ O2dltp = O2act − O2trg                             │
│ Pimad = j(O2dltp)                                  │
└──────────────────────────────────────────────────┘
                      │
                      ▼
┌──────────────────────────────────────────────────┐      ST7
│ Calculate corrected target boost pressure         │
│ (Pimtrgf)                                          │
│ Pimtrgf = min(max(Pim + Pimad, Pimtrg), Pimmax)    │
└──────────────────────────────────────────────────┘
                      │
                      ▼
┌──────────────────────────────────────────────────┐      ST8
│ Calculate boost pressure-corrected oxygen density │
│ (O2hw)                                             │
│ O2hw = k(Astd, O2con, Pimtrgf)                     │
└──────────────────────────────────────────────────┘
                      │
                      ▼
                     (A)
```

# FIG.6

Calculate oxygen concentration target value (O2contrgf)

$$O_2 dlte = O_2 hw - O_2 trg$$

$$O_2 contrgf = max(min(m(O_2 dlte) + O_2 con, 0.23), O_2 conmin)$$

— ST9

Calculate corrected target EGR rate (Egrtrgf)

$$Egrtrgf = n(O_2 contrgf, Ne, Qfin)$$

— ST10

Calculate EGR-corrected oxygen density (O2hwe)

$$O_2 hwe = o(Astd, O_2 contrgf, Egrtrgf)$$

— ST11

Calculate standard crank angle correction amount (Acomp)

$$O_2 dlta = O_2 hwe - O_2 trg$$

$$Acomp = p(O_2 dlta)$$

— ST12

Calculate corrected injection time (Ainjf)

$$Ainjf = q(Acomp, Ainj, Pcr, O_2 contrgf)$$

— ST13

RETURN

FIG.7

FIG.8

FIG.9

```
        ┌─────────────────────────────┐
        │     Control oxygen density   │
        └──────────────┬──────────────┘
                       │
        ┌──────────────▼──────────────┐
        │   Calculate base target values │─── ST21
        └──────────────┬──────────────┘
                       │
        ┌──────────────▼──────────────┐
        │  Calculate actual oxygen density │─── ST22
        └──────────────┬──────────────┘
                       │
        ┌──────────────▼──────────────┐
        │ Calculate final target boost pressure │─── ST23
        └──────────────┬──────────────┘
                       │
        ┌──────────────▼──────────────┐
        │  Set final target boost pressure │─── ST24
        └──────────────┬──────────────┘
                       │
        ┌──────────────▼──────────────┐
        │  Calculate actual oxygen density │─── ST25
        └──────────────┬──────────────┘
                       │
        ┌──────────────▼──────────────┐
        │   Calculate target EGR rate  │─── ST26
        └──────────────┬──────────────┘
                       │
        ┌──────────────▼──────────────┐
        │       Set target EGR rate    │─── ST27
        └──────────────┬──────────────┘
                       │
        ┌──────────────▼──────────────┐
        │  Calculate actual oxygen density │─── ST28
        └──────────────┬──────────────┘
                       │
        ┌──────────────▼──────────────┐
        │   Calculate final injection time │─── ST29
        └──────────────┬──────────────┘
                       │
        ┌──────────────▼──────────────┐
        │     Set final injection time │─── ST30
        └──────────────┬──────────────┘
                       │
        ┌──────────────▼──────────────┐
        │           RETURN             │
        └─────────────────────────────┘
```

FIG.10

```
        ┌─────────────────────────────┐
        │  Calculate base target values │
        └─────────────────────────────┘
                      │
                      ▼
   ┌──────────────────────────────────────┐
   │  Read engine state amounts (Ne, Qfin) │ ─── ST41
   └──────────────────────────────────────┘
                      │
                      ▼
   ┌──────────────────────────────────────────────────┐
   │ · Calculate base injection time (Ainj)             │
   │ · Calculate target oxygen density (O2trg)          │ ─── ST42
   │ · Calculate base target boost pressure (Pimtrg)    │
   │ · Calculate maximum boost pressure (Pimmax)        │
   │ · Calculate minimum oxygen concentration (O2conmin)│
   └──────────────────────────────────────────────────┘
                      │
                      ▼
              ┌───────────────┐
              │      END       │
              └───────────────┘
```

## FIG.11

Calculate actual oxygen density

Read gas state amounts (Ga, Pim, Thim) and injection pressure (Pcr) —— ST51

Calculate actual oxygen concentration (O2con)
$O_2con = f(Ga, Pim, Thim)$ —— ST52

Calculate standard crank angle (Astd)
$Astd = g(Ainj, Pcr, O_2con)$ —— ST53

Calculate actual oxygen density (O2act)
$O_2act = h(Astd, O_2con, Pim)$ —— ST54

END

## FIG.12

Calculate final target boost pressure

Calculate target boost pressure correction amount (Pimad)
$O_2dltp = O_2act - O_2trg$
$Pimad = j(O_2dltp)$ —— ST61

Calculate corrected target boost pressure (Pimtrgf)
$Pimtrgf = min(max(Pim + Pimad, Pimtrg), Pimmax)$ —— ST62

END

## FIG.13

```
        ┌──────────────────────────────┐
        │    Calculate target EGR rate  │
        └──────────────────────────────┘
                       │
                       ▼
┌──────────────────────────────────────────────────────┐
│ Calculate oxygen concentration target value (O₂contrgf) │──── ST71
│           O₂dlte = O₂act − O₂trg                        │
│ O₂contrgf = max(min(m(O₂dlte)+O₂con, 0.23), O₂conmin)   │
└──────────────────────────────────────────────────────┘
                       │
                       ▼
┌──────────────────────────────────────────────┐
│   Calculate corrected target EGR rate (Egrtrgf) │──── ST72
│       Egrtrgf = n(O₂contrgf, Ne, Qfin)          │
└──────────────────────────────────────────────┘
                       │
                       ▼
              ┌──────────────┐
              │     END      │
              └──────────────┘
```

Calculate target EGR rate

Calculate oxygen concentration target value ($O_2$contrgf) — ST71
$$O_2dlte = O_2act - O_2trg$$
$$O_2contrgf = \max(\min(m(O_2dlte)+O_2con,\ 0.23),\ O_2conmin)$$

Calculate corrected target EGR rate (Egrtrgf) — ST72
$$Egrtrgf = n(O_2contrgf,\ Ne,\ Qfin)$$

END

## FIG.14

Calculate final injection time

Calculate standard crank angle correction amount (Acomp) — ST81
$$O_2dlta = O_2act - O_2trg$$
$$Acomp = p(O_2dlta)$$

Calculate final injection time (Ainjf) — ST82
$$Ainjf = q(Acomp,\ Astd,\ Ainj,\ Pcr,\ O_2con)$$

END

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010127175 A
- JP 2010236460 A
- EP 2065587 A2
- JP 2010067548 W